# EUROPÄISCHE PATENTSCHRIFT

(11) **EP 4 058 704 B1**
(45) Veröffentlichungstag und Bekanntmachung des Hinweises auf die Patenterteilung: **24.04.2024**
(21) Anmeldenummer: 20811558.4
(22) Anmeldetag: 19.11.2020
(51) Int. Cl.: F16K 31/06, F02B 29/08, F02D 9/14, F02D 11/10, F02D 41/00, F02M 26/53, F02M 26/68, F16K 31/08, F16K 37/00, H01F 7/16

(54) **ELEKTROMAGNETISCHER VENTILAKTUATOR FÜR ANSCHLAGFREIES ELEKTROMAGNETISCH BETÄTIGTES VENTIL, VENTIL UND HUBKOLBENBRENNKRAFTMASCHINE MIT VENTIL**
ELECTROMAGNETIC VALVE ACTUATOR FOR STOP-FREE ELECTROMAGNETICALLY ACTUATED VALVE, VALVE AND RECIPROCATING PISTON INTERNAL COMBUSTION ENGINE WITH VALVE
ACTIONNEUR DE SOUPAPE ÉLECTROMAGNÉTIQUE POUR SOUPAPE À ACTIONNEMENT ÉLECTROMAGNÉTIQUE SANS ARRÊT, SOUPAPE ET MOTEUR À COMBUSTION INTERNE À PISTON ALTERNATIF AVEC SOUPAPE

(30) Priorität: 22.11.2019 DE 102019131604
(43) Veröffentlichungstag der Anmeldung: 21.09.2022
(73) Patentinhaber: Induserve B.V., 5737 EL Lieshout (NL)
(72) Erfinder: LUIJTEN, Waltherus, 5737 EL Lieshout (NL); CREMER, Peter, 4721 Kelmis (BE); FALTER, Rainer, 4851 Gemmenich (BE); MINNAERT, Johannes, 52511 Geilenkirchen (DE); BOESTEN, Rob, 6305 AT Schin op Geul (NL)
(74) Vertreter: Kramer Barske Schmidtchen Patentanwälte PartG mbB
(86) Internationale Anmeldenummer: PCT/EP2020/082728
(87) Internationale Veröffentlichungsnummer: WO 2021/099489

(56) Entgegenhaltungen:
- WO-A1-00/03131
- JP-A- S6 078 180
- JP-A- 2001 006 928

## Beschreibung

Die vorliegende Offenbarung betrifft ein anschlagfreies elektromagnetisch betätigtes Ventil, das mittels eines elektromagnetischen Ventilaktuators betätigbar ist, und eine Hubkolbenbrennkraftmaschine mit dem anschlagfreien elektromagnetischen Ventil.

Weiterhin betrifft die Offenbarung eine Hubkolbenbrennkraftmaschine mit einer vorteilhaften Ladungssteuerung.

Einfache im Stand der Technik bekannte elektromagnetisch betätigte Ventile weisen einen elektromagnetischen Ventilaktuator mit einem Eisenkern auf, der durch eine Spule von einer Ausgangslage in eine Richtung ausgelenkt werden kann. In der Ausgangslage ist die Spule dabei stromlos. Eine Feder sorgt für die Zurückbewegung bzw. Vorspannung in die Ausgangslage.

Weiterhin sind sogenannte bistabile elektromagnetische Ventile bzw. Aktuatoren bekannt. Anders als bei den einfachen Aktuatoren kann das Ventil hier stromlos in zwei verschiedenen Stellungen gehalten werden. Der Eisenkern ist hier beispielsweise ein Ankermagnet (Permanentmagnet), der durch Bestromung der Spule von einer ersten Stellung in eine zweite Stellung bewegbar ist. In der zweiten Stellung kann der Ankermagnet durch einen weiteren Permanentmagneten stabil festgehalten werden. Zum Zurückschalten in die erste Stellung wird die Spule mit vertauschter Polarität bestromt, sodass der Ankermagnet wieder von dem weiteren Permanentmagneten weg in die erste Stellung bewegt wird. Der Ankermagnet kann in der ersten Stellung durch eine Feder oder durch einen weiteren (dritten) Permanentmagneten gehalten werden. Üblicherweise befindet sich der Ankermagnet sowohl in der ersten Stellung als auch der zweiten Stellung in Anschlag an ein Anschlagbauteil oder bevorzugt einen Permanentmagneten.

Solche und ähnliche elektromagnetische Ventile bzw. Aktuatoren sind beispielsweise aus der DE 33 23 982 A1, der DE 41 24 087 A1, der DE 44 15 068 C2, der DE 10 2013 113 112 A1 und der DE 10 2010 021 250 A1 bekannt. Weitere Magnetventile sind aus der JP 2001 006928 A und der JP S60 78180 A bekannt.

Eine Hubkolbenbrennkraftmaschine mit vorteilhafter Ladungssteuerung, bei der ein elektromagnetisches Ventil eingesetzt wird, ist beispielsweise aus der WO 00/03131 A1 bekannt.

Des Weiteren sind Hubkolbenbrennkraftmaschinen bekannt, bei welchen eine Abgasrückführungsvorrichtung vorgesehen ist, in der ein elektromagnetisches Ventil arbeitet.

Eine Aufgabe der vorliegenden Erfindung ist es, ein verbessertes elektromagnetisch betätigtes Ventil und eine verbesserte Hubkolbenbrennkraftmaschine mit einem elektromagnetisch betätigten Ventil anzugeben. Eine weitere Aufgabe ist die Angabe eines verbesserten Verfahrens zum Betreiben eines elektromagnetisch betätigten Ventils.

Diese Aufgaben werden gelöst durch, ein elektromagnetisch betätigtes Ventil nach Anspruch 1 und eine Hubkolbenbrennkraftmaschine nach Anspruch 12 oder 16 und ein Verfahren nach Anspruch 17.

Weiterbildungen sind in den abhängigen Ansprüchen angegeben.

Ein elektromagnetischer Ventilaktuator gemäß der vorliegenden Offenbarung weist ein Aktuatorgehäuse auf. Das Aktuatorgehäuse kann als Teil eines Fluidkanalgehäuses, Ventilgehäuses oder anderer Gehäuse ausgebildet sein oder an diesen angebracht sein, oder umgekehrt. Das Aktuatorgehäuse kann aus einem oder einer Mehrzahl von Bauteilen ausgebildet sein.

In dem Ventilaktuator ist eine Magnetspule vorgesehen, die bevorzugt an oder in dem Gehäuse bevorzugt starr angebracht ist. Bevorzugt wird die Magnetspule in dem Gehäuse gehalten. Bevorzugt ist sie ringförmig mit zentralem Durchgangsloch ausgebildet. Sie kann als Luftspule ohne Wickelkörper alleine durch einen Spulendraht ausgebildet sein, der mit seinem Durchgangsloch auf einem Spulenträger gehalten wird, oder auf einen Wickelkörper aufgewickelt sein, der ein Durchgangsloch aufweist und um den ein Spulendraht gewickelt ist. Bevorzugt ist auch der Wickelkörper ringförmig ausgebildet. Der Wickelkörper kann metallisch, bevorzugt aus Eisen, oder nicht-metallisch, beispielsweise aus Kunststoff, ausgebildet sein. Zur Betätigung der Magnetspule, also zum Erzeugen eines Magnetfelds, sind die Drahtenden des Spulendrahtes mit einer Spannungsquelle (bevorzugt Gleichspannungsquelle) bzw. Stromquelle verbunden. Bevorzugt ist die Spannungsquelle ein Steuergerät (Aktuatorsteuergerät), mit dem eine gesteuerte Spannung ausgegeben werden kann. Die Spule ist bevorzugt derart ausgebildet, dass ein Magnetfeld mit einer geraden Polachse erzeugbar ist, die bevorzugt mittig durch das Durchgangsloch verläuft und senkrecht zu einer Ebene ist, in der das Durchgangsloch ausgebildet ist. Die Spule kann beispielsweise über Pulsweitenmodulation angesteuert werden. Mit anderen Worten, der Nordpol befindet sich auf einer Seite des Rings, der Südpol auf der anderen Seite.

Weiterhin ist ein erster Permanentmagnet vorgesehen, der am Gehäuse direkt oder indirekt über weitere Bauteile bevorzugt starr befestigt ist. Bevorzugt hält der erste Permanentmagnet an einem Gehäusebauteil (z.B. Gehäusedeckel) alleine durch seine eigene Magnetkraft fest. Die Positionierung erfolgt bevorzugt über eine entsprechende Vertiefung im Gehäusebauteil. Alternativ ist der erste Permanentmagnet beispielsweise mit dem Gehäusebauteil verschraubt oder verklebt oder ähnlich befestigt. Bevorzugt ist der erste Permanentmagnet ringförmig oder zylinderförmig ausgebildet. Die Polachse des von dem ersten Permanentmagneten erzeugten Feldes ist bevorzugt koaxial zu der Polachse der Magnetspule. Bevorzugt ist der erste Permanentmagnet oberhalb bzw. auf einer Seite der Magnetspule außerhalb derselben bevorzugt mit Abstand in der Axialrichtung (der Richtung der Polachsen) zu derselben angeordnet. Es können auch mehrere erste Permanentmagneten vorgesehen sein, deren Polachsen parallel zu dem Magnetfeld der Magnetspule verlaufen. Es können auch nicht-ringförmige erste Permanentmagneten vorgesehen sein.

Weiterhin ist ein zweiter Permanentmagnet vorgesehen, der am Gehäuse direkt oder indirekt über weitere Bauteile bevorzugt starr befestigt ist. Bevorzugt ist der zweite Permanentmagnet ringförmig oder zylinderförmig ausgebildet. Die Polachse des von dem zweiten Permanentmagneten erzeugten Feldes ist bevorzugt koaxial zu der Polachse der Magnetspule. Bevorzugt ist der zweite Permanentmagnet innerhalb der Magnetspule vorgesehen. Bevorzugt hält der zweite Permanentmagnet an einem in die Magnetspule hineinragenden Bauteil allein durch seine eigene Magnetkraft fest. Die Positionierung erfolgt bevorzugt über eine entsprechende Vertiefung im Gehäuse. Alternativ ist der zweite Permanentmagnet beispielsweise mit dem Bauteil verschraubt oder verklebt oder ähnlich befestigt. Das in die Magnetspule hineinragenden Bauteil ist direkt oder indirekt mit dem Aktuatorgehäuse verbunden bzw. daran befestigt. Es können auch mehrere zweite Permanentmagneten vorgesehen sein, deren Polachsen parallel zu dem Magnetfeld der Magnetspule verlaufen. Es können auch nicht ringförmige zweite Permanentmagneten vorgesehen sein.

Weiter ist ein dritter Permanentmagnet vorgesehen, der gleichzeitig als Ankermagnet für die Magnetspule dient. Bevorzugt ist der dritte Permanentmagnet ringförmig oder zylinderförmig ausgebildet und koaxial zu der Spulenachse angeordnet. Er ist also bevorzugt so ausgebildet, dass er in dem Aktuatorgehäuse entlang einer Bewegungsachse bewegbar ist, die bevorzugt koaxial oder parallel zu der Polachse der Magnetspule ist. Bevorzugt ist der dritte Permanentmagnet zwischen einer Stellung innerhalb oder mindestens radial überlappend mit der Magnetspule und einer Stellung außerhalb der Magnetspule, also radial nicht überlappend bewegbar. In der Stellung außerhalb der Magnetspule ist der dritte Permanentmagnet bevorzugt zwischen dem ersten Permanentmagneten und dem zweiten Permanentmagneten angeordnet. Der dritte Permanentmagnet ist bevorzugt an einem Verbindungsbauteil befestigt, beispielsweise mit diesem verklebt, verpresst oder verschraubt, welches zur Verbindung mit einem Ventilkörper vorgesehen ist. Alternativ kann der dritte Permanentmagnet unmittelbar an einem (oberen) Ende des Ventilkörpers vorgesehen sein. Der dritte Permanentmagnet kann selbst in der Spule gelagert sein. Alternativ oder zusätzlich kann die Lagerung bezüglich des Ventilgehäuses über das Verbindungsglied oder den Ventilkörper selbst erfolgen. Der dritte Permanentmagnet ist bevorzugt, bezogen auf die Spulenachse bzw. Bewegungsachse, zwischen dem ersten Permanentmagneten und dem zweiten Permanentmagneten angeordnet. Der dritte Permanentmagnet wird in der Axialrichtung bevorzugt allein durch magnetische Kräfte gehalten. Eine Feder oder ähnliches Vorspannelement ist bevorzugt nicht vorgesehen.

Jeder Permanentmagnet ist bevorzugt derart ausgebildet, dass die Pole auf einer geraden Polachse liegen, ähnlich wie bei einem herkömmlichen Stabmagneten. Beispielsweise ist der erste Permanentmagnet so ausgebildet und angeordnet, dass er entlang der Bewegungsachse auf der Seite entgegengesetzt dem dritten Permanentmagneten seinen Nordpol hat und auf der dem dritten Permanentmagneten zugewandten Seite seinen Südpol hat (=oben Nordpol, unten Südpol). In diesem Fall ist der zweite Permanentmagnet so ausgebildet, dass er entlang der Bewegungsachse auf der Seite entgegengesetzt dem dritten Permanentmagneten seinen Südpol hat und auf der dem dritten Permanentmagneten zugewandten Seite seinen Nordpol hat (=oben Nordpol, unten Südpol). Der dazwischen angeordnete dritte Permanentmagnet hat in diesem Fall auf der dem ersten Permanentmagneten zugewandten Seite seinen Südpol und auf der dem zweiten Permanentmagneten zugewandten Seite seinen Nordpol (= oben Südpol, unten Nordpol). Die Permanentmagneten sind weiterhin bevorzugt so ausgebildet, dass der Südpol des dritten Permanentmagneten in der Gleichgewichtslage innerhalb des Feldes des Südpol des ersten Permanentmagneten angeordnet ist und der Nordpol des dritten Permanentmagneten in der Gleichgewichtslage innerhalb des Feldes des Nordpol des zweiten Permanentmagneten angeordnet ist, sodass in der Gleichgewichtslage abstoßende Kräfte zwischen dem dritten Permanentmagneten und dem ersten Permanentmagneten und dem dritten Permanentmagneten und dem zweiten Permanentmagneten wirken. Es versteht sich von selbst, dass die Polungen auch jeweils umgekehrt sein können (erster Permanentmagnet oben Südpol und unten Nordpol, zweiter Permanentmagnet oben Südpol und unten Nordpol, dritter Permanentmagnet oben Nordpol und unten Südpol).

Der Aktuator ist also so ausgebildet, dass in einem Zustand, in dem keine elektrische Spannung an die Magnetspule angelegt ist (= stromloser bzw. spannungsloser Zustand) der dritte Permanentmagnet gleichzeitig von dem ersten Permanentmagneten und von dem zweiten Permanentmagneten abgestoßen wird. Dies wird, wie angegeben, bevorzugt dadurch erreicht, dass die Polaritäten des ersten und der zweiten Permanentmagneten gleichgerichtet sind und die Polarität des dritten Permanentmagneten entgegen diesen Polaritäten gerichtet ist. Insbesondere ist der Aktuator bevorzugt so ausgebildet, dass sich der dritte Permanentmagnet im spannungslosen Zustand entlang der Bewegungsachse selbstständig in eine Gleichgewichtslage bewegt, in der der dritte Permanentmagnet axial beabstandet sowohl zu dem ersten Permanentmagneten als auch dem zweiten Permanentmagneten ist. Bevorzugt ist der Aktuator so ausgebildet, dass der dritte Permanentmagnet durch eine Axialkraft aus dieser Gleichgewichtslage sowohl in die eine Axialrichtung (nach oben) als auch die andere Axialrichtung (mindestens um einen vorbestimmten Weg) auslenkbar ist. Die tatsächliche Stellung des dritten Permanentmagneten in dieser Gleichgewichtslage kann von der Einbaulage des Ventilaktuators und Reibung in der Lagerung des dritten Permanentmagneten abhängen und ist daher nicht auf eine einzige vorbestimmte Position beschränkt. Vielmehr können sich je nach Umgebungsbedingung unterschiedliche Stellungen einstellen oder je nach Umgebungs-/Einsatzbedingungen unterschiedliche vorbestimmbare Stellungen implementiert werden.

Der Aktuator ist weiter so ausgebildet, dass der dritte Permanentmagnet in der Axialrichtung aus der Gleichgewichtslage durch Anlegen von Spannung an die Magnetspule auslenkbar ist (auch: Bestromung der Magnetspule). Bevorzugt kann die Auslenkung je nach Polung der Spannung in die eine oder andere Richtung erfolgen. Bevorzugt kann der Auslenkungsbetrag (Größe der Auslenkung) durch die Höhe der Spannung und/oder des Stroms bestimmt werden.

Der so ausgebildete Aktuator kann anschlagsfrei betätigt werden. Insbesondere wird er in seiner Ruhelage (Gleichgewichtslage ohne Spannung) nur durch Magnetkräfte gehalten. Wenn er durch eine externe Kraft aus der Gleichgewichtslage ohne Spannung entlang der Bewegungsachse ausgelenkt wird (egal in welche Richtung), wird eine der Auslenkung entgegenwirkende Kraft, die von dem auf der Seite in Richtung der Auslenkung liegenden gehäusefesten Permanentmagneten ausgeht, bevorzugt größer. Gleichzeitig wird eine in Richtung der Auslenkung wirkende Kraft, die von dem auf der Seite entgegengesetzt der Richtung der Auslenkung liegenden gehäusefesten Permanentmagneten ausgeht, bevorzugt kleiner. Hierdurch wird der dritte Permanentmagnet sicher in der Gleichgewichtslage ohne Spannung gehalten. Wurde der dritte Permanentmagnet durch eine externe Kraft ausgelenkt, bewegt er sich bevorzugt selbstständig in die Gleichgewichtslage ohne Spannung zurück. Je nach Größe der Auslenkung und Reibung in der Lagerung des dritten Permanentmagneten kann der dritte Permanentmagnet in der Zurückbewegung die Gleichgewichtslage ohne Spannung überfahren und sich auf diese einschwingen.

Ist die Polung der Permanentmagnete wie im oben genannten ersten Beispiel (dritter Permanentmagnet oben Südpol und unten Nordpol) und befindet sich der dritte Permanentmagnet im Bereich des oberen Endes der Magnetspule, kann beispielsweise, wenn mit der Magnetspule ein Feld erzeugt wird, bei welchem oben der Nordpol und unten der Südpol ist, der dritte Permanentmagnet durch dieses Feld nach unten ausgelenkt werden. Eine Auslenkung nach oben kann durch umgekehrte Polung der Magnetspule erreicht werden. Bei umgekehrter Polung der Permanentmagneten (dritter Permanentmagnet unten Südpol und oben Nordpol) erfolgt die Auslenkung nach oben durch Erzeugen eines Magnetfelds, bei dem der Nordpol oben ist, und die Auslenkung nach unten durch Erzeugen eines Magnetfelds, bei dem der Nordpol unten ist.

Weiterhin ist bevorzugt ein Spulenträger vorgesehen, der bevorzugt Teil des Aktuatorgehäuses ist oder mit diesem verbunden ist. Der Spulenträger ist bevorzugt aus Eisen und bevorzugt als Teil des magnetischen Kreises des Aktuators, insbesondere der Magnetspule ausgebildet. Die Magnetspule ist bevorzugt an dem Spulenträger befestigt, beispielsweise durch Kleben, Vergie-ßen, Pressen oder Schrauben. Die Magnetspule, und damit die Lage der Wicklungen, ist axial nicht beweglich. Bevorzugt ist ein die Magnetspule umgebender Mantel vorgesehen, der die Magnetspule radial umgibt und bevorzugt aus Eisen ausgebildet ist. Die Magnetspule kann den Mantel kontaktieren oder mit Ringspalt zu ihm angeordnet sein. Der Spulenträger ist bevorzugt als Zylinder, noch bevorzugter als gestufter Zylinder ausgebildet, der ein zentrales Durchgangsloch aufweist, durch das sich der Ventilkörper oder das Verbindungsglied hindurch erstrecken. Ein Stufenabschnitt dient zur Abstützung der Spule. Ein Bereich mit kleinerem Außendurchmesser erstreckt sich in die Spule und zentriert diese dadurch. Bevorzugt ist an dem Spulenträger auf der dem ersten Permanentmagneten zugewandten Seite bevorzugt innerhalb der Spule auch der zweite Permanentmagnet befestigt. Alternativ kann der Spulenträger selbst als zweiter Permanentmagnet ausgebildet sein. Der Spulenträger ist bevorzugt auf der dem ersten Permanentmagneten abgewandten Seite der Spule vorgesehen und mit dem Aktuatorgehäuse verspannt.

Weiterhin ist bevorzugt ein Kraftverstärkungsring vorgesehen, mit dem das Magnetfeld der Magnetspule stärker gebündelt werden kann, wodurch die resultierende Kraft verstärkt werden kann. Bevorzugt ist der Kraftverstärkungsring aus einem ferromagnetischen Material wie beispielsweise Eisen ausgebildet. Bevorzugt ist der Kraftverstärkungsring auf der zu dem Spulenträger in der Axialrichtung entgegengesetzten Ende der Magnetspule vorgesehen. Bevorzugt ist der Kraftverstärkungsring als zylinderförmiger Körper ausgebildet, dessen Innenumfang gleich oder größer dem der Magnetspule ist und dessen Außenumfang gleich oder kleiner dem der Magnetspule ist. Bevorzugt kontaktiert der Kraftverstärkungsring unmittelbar den ihn umgebenden Mantel, beispielsweise ist der Kraftverstärkungsring hierfür durch Presspassung in den Mantel eingepresst. Bevorzugt kontaktiert der Mantel den Spulenträger unmittelbar, beispielsweise steht er unten auf ihm auf.

Der erste Permanentmagnet ist bevorzugt an einem Gehäusebauteil befestigt, das bevorzugt als kreisscheibenförmige Platte ausgebildet ist. Bevorzugt ist das Gehäusebauteil als Gehäusedeckel ausgebildet, der ein Gehäuse des Aktuators verschließt. Das Gehäusebauteil ist bevorzugt aus Eisen ausgebildet. Bevorzugt kontaktiert das Gehäusebauteil den Mantel, der die Magnetspule und den Kraftverstärkungsring umgibt, unmittelbar. Bevorzugt ist der erste Permanentmagnet mittels des Gehäusebauteils derart angeordnet, dass er einen axialen Abstand zu dem Kraftverstärkungsring aufweist. Bevorzugt entsprechen der Innendurchmesser und der Außendurchmesser des ersten Permanentmagneten in etwa dem des dritten Permanentmagneten.

Weiterhin ist bevorzugt ein den Mantel von außen umgebender Gehäuseaußenmantel, der von dem Gehäusedeckel verschlossen wird und die übrigen Bauteile von außen umgibt, vorgesehen. Bevorzugt ist der Gehäuseaußenmantel zur besseren Kühling des Innenraums aus Aluminium ausgebildet.

Durch die bevorzugte direkte Kontaktierung von Spulenträger, der den zweiten Permanentmagneten trägt, Mantel und Gehäusebauteil, das den ersten Permanentmagneten trägt, und bevorzugt auch Kraftverstärkungsring kann ein gebündelter Magnetkreis bzw. ein gebündeltes Magnetsystem ausgebildet werden, der bzw. das bei kompakten Aufbau hohe Magnetkräfte erzeugt.

Bevorzugt ist das Aktuatorgehäuse derart ausgebildet, dass es an ein Ventilgehäuse (Fluidkanalgehäuse) anbringbar oder integral mit diesem ausgebildet ist.

Das elektromagnetisch betätigte Ventil (auch "EOCV" für Electronically Operated Control Valve oder Electronic Open Close Valve genannt) weist den elektromagnetischen Ventilaktuator, ein Fluidkanalgehäuse und einen Ventilkörper auf. Innerhalb des Fluidkanalgehäuses wird ein Fluidkanal ausgebildet, der von einem Fluid durchströmbar ist. Mittels des Ventilkörpers kann ein Fluidstrom durch das Fluidkanalgehäuse bzw. den Fluidkanal unterbrochen oder verringert werden. Insbesondere kann durch den Ventilkörper die für eine Fluidströmung zur Verfügung stehende Querschnittsfläche innerhalb des Fluidkanal mindestens abschnittsweise verringert und/oder verschlossen werden.

Der Ventilkörper weist an seinem einen (oberen) Ende bevorzugt einen Verbindungsabschnitt auf, der zur starren Verbindung mit dem Verbindungsbauteil des Ventilaktuators ausgebildet ist. Beispielsweise kann das obere Ende des Ventilkörpers mit dem Verbindungsbauteil über eine Schraubverbindung oder einen Presssitz verbunden werden. Alternativ kann das Verbindungsbauteil integral (also einteilig) mit dem Ventilkörper ausgebildet sein oder der Ventilkörper direkt mit dem dritten Permanentmagneten verbunden werden. Der Ventilkörper ist in dem Fluidkanalgehäuse und, wenn er sich bis in das Aktuatorgehäuse erstreckt, auch in dem Aktuatorgehäuse bevorzugt radial entlang der Bewegungsachse des dritten Permanentmagneten (mit dem er über das Verbindungsbauteil oder direkt verbunden ist) bewegbar gelagert.

Der Ventilkörper ist mittels des Ventilaktuators in mindestens eine geschlossene Stellung bringbar, in der der Fluidstrom durch das Fluidkanalgehäuse bzw. dem Fluidkanal unterbrochen ist oder in der der Fluidkanal durch den Ventilkörper im Wesentlichen versperrt ist. Im Wesentlichen bedeutet hier, dass für die jeweilige Anwendung eine ausreichende Abdichtung gewährleistet ist. Bevorzugt ist das Ventil so ausgebildet, dass sich die geschlossene Stellung im spannungslosen Zustand der Magnetspule selbsttätig einstellt. Der Ventilkörper wird also im spannungslosen Zustand der Magnetspule bevorzugt nur durch die Permanentmagneten in der geschlossenen Stellung gehalten.

Weiterhin ist der Ventilkörper mittels des Aktuators in zulässigen Betriebszuständen in mindestens zwei Endlagen verfahrbar und dort dauerhaft haltbar. Bevorzugt ist eine dieser Endlagen eine maximal offene Stellung, in der der Fluidkanal bzw. dessen Strömungsquerschnitt am weitesten geöffnet ist, und die jeweils andere eine geschlossene Stellung, bei der der Kanal geschlossen ist. Hierbei soll unter maximal offene Stellung bevorzugt die Stellung verstanden werden, die über eine im zulässigen Betriebsbereich maximal angelegte Spannung im Betrieb des Ventils erreichbar ist. Gegebenenfalls sind durch Aufbringen noch höherer Spannungen oder durch Aufbringen externer Kräfte auf den Ventilkörper Stellungen möglich, die das Ventil noch mehr öffnen als dies in der maximal offenen Stellung der Fall ist und die den Ventilkörper oder Aktuator in Anschlag an ein Bauteil bringen. Diese höheren Spannungen liegen aber außerhalb des zulässigen Betriebsbereichs und können ggfs. nur im Schadenfall oder unter einem Risiko der Entstehung eines Schadens erreicht werden. Die im Betrieb angefahrenen Endpositionen (geschlossene Stellung und maximal geöffnete Stellung) sind anwendungstechnisch sinnvolle und gewollte eingestellte Stellungen. Insbesondere ist der Ventilkörper in dieser maximal offenen Stellung durch das mit der Magnetspule erzeugte Feld magnetisch, im Sinne einer Feder, "vorgespannt". Hierdurch kann ein schnelles automatisches Rückstellen in die geschlossene Stellung nach Abschalten der Spannung ohne Aufbringen zusätzlicher Energie erfolgen. Durch Bestromen der Magnetspule in Gegenrichtung, kann der Schließvorgang zusätzlich beschleunigt werden. Dies ist besonders von Vorteil, da der für die Anwendung im Verbrennungsmotor wichtige Vorgang der Schließvorgang ist und für diesen auch nur weniger Zeit zur Verfügung steht.

Das Ventil kann so ausgebildet sein, dass der Ventilkörper ausgehend von der geschlossenen Stellung in zwei Richtung in jeweils offene Stellungen bringbar ist, oder umgekehrt.

Es versteht sich, dass die Stellung, in der das Ventil sich im spannungslosen Zustand befindet, auch eine andere Stellung (z.B. halb geschlossen, geöffnet, maximal geöffnet oder eine Stellung auf der bezüglich der geschlossenen Stellung gegenüber zu der offenen Stellung liegenden Stellung) sein kann und dass sowohl in der geschlossenen als auch offenen Stellung eine Spannung, insbesondere entgegengesetzte Spannungen, angelegt sein muss.

Mittels des Aktuators, insbesondere mittels der Einstellung der elektrischen Spannung an der Magnetspule einschließlich Abschalten der Spannung, kann der Ventilkörper bevorzugt mindestens in die oben genannten Stellungen gebracht werden. Die maximal offene Stellung oder die geschlossene Stellung wird bevorzugt nicht über mechanische Anschläge oder Ähnliches bestimmt. Dies trifft bevorzugt auch für die spannungsfreie Stellung zu. Der Ventilkörper ist bevorzugt dauerhaft in die entsprechenden Stellungen, insbesondere auch in die maximal offene Stellung, bringbar. Bevorzugt ist die maximal offene Stellung eine Position, in der der Ventilkörper mittels der Magnetspule dauerhaft gehalten werden kann. In der maximal offenen Stellung sind die magnetischen Kräfte, die zwischen dem dritten Permanentmagneten und dem ersten und zweiten Permanentmagneten und der Magnetspule wirken, im Gleichgewicht.

Bei bzw. nach einer Bewegung von der geschlossenen Stellung in die maximal offene Stellung kann die maximal offene Stellung mit dem Ventilkörper überfahren werden (d. h., dass sich der Ventilkörper aufgrund seiner Massenträgheit über die maximal offene Stellung hinausbewegt). Der Aktuator ist bevorzugt so ausgebildet, dass sich beim Überfahren der maximal offenen Stellung eine Rückstellkraft einstellt, die den Ventilkörper in die Gleichgewichtslage in der maximal offenen Stellung zurückbewegt. Das Überschwingen wird maßgeblich durch die Reibung des Ventilkörpers im Gehäuse bestimmt. Bevorzugt ist das elektromagnetisch betätigte Ventil derart ausgebildet, dass auch in bzw. bei einem solchen Überschwingen der Ventilkörper oder Aktuator nicht gegen einen Anschlag stößt.

Mit anderen Worten, der Ventilkörper wird sowohl in der geschlossenen Stellung als auch der maximal offenen Stellung bevorzugt nur durch magnetische Kräfte jeweils in einer Gleichgewichtslage gehalten. Des Weiteren wirken auf den Ventilkörper auch in der Bewegung von der geschlossenen Stellung und zu der maximal offenen Stellung und umgekehrt ausschließlich magnetische Kräfte (jeweils unter Vernachlässigung von Reibungskräften).

Bevorzugt ist das elektromagnetisch betätigte Ventil derart ausgebildet, dass die geschlossene Stellung jeweils nicht nur an einem einzigen vorbestimmten Ort des Ventilkörpers bezüglich des Ventilgehäuses vorliegt, sondern in einem vorbestimmten Bewegungsbereich des Ventilkörpers. Es liegt also ein Bewegungsbereich vor, in dem die geschlossene Stellung realisiert wird. Weiterhin ist das Ventil bevorzugt derart ausgebildet, dass zwischen der maximal offenen Stellung und der geschlossenen Stellung bzw. dem Bewegungsbereich in der geschlossenen Stellung beliebige weitere offene Stellungen einstellbar sind, bei denen das Ventil gegenüber der maximal offenen Stellung in einem geringeren Maße geöffnet ist.

Die Stellung, die sich einstellt, wenn keine Spannung anliegt, kann die geschlossene Stellung oder die maximal offene Stellung oder jede beliebige Zwischenstellung sein.

Eine mindestens einen Teil des Fluidkanals ausbildende Innenwand des Fluidkanalgehäuses weist bevorzugt mindestens einen Innenumfangsdichtbereich auf. Der Ventilkörper weist bevorzugt einen komplementär zu dem Innenumfangsdichtbereich (d.h. mit einer im Wesentlichen identischen Querschnittsform) ausgebildeten Außenumfangsdichtbereich auf, der zum Verschließen des Fluidkanals nahezu in Anlage an den Innenumfangsdichtbereich bringbar ist. Bevorzugt umschreibt eine Projektion des Innenumfangsdichtbereichs auf eine Projektionsfläche senkrecht zu der Bewegungsachse eine Projektion des Außenumfangsdichtbereichs auf die Projektionsfläche oder stimmt mit ihr nahezu überein. Hierdurch wird sichergestellt, dass der Außenumfangsdichtbereich in der Axialrichtung an dem Innenumfangsdichtbereich vorbei bewegbar ist. Das Spiel zwischen Außenumfangsdichtbereich und Innenumfangsdichtbereich ist bevorzugt größer als das Spiel zur Lagerung des Ventilkörpers. Bevorzugt sind Innenumfangsdichtbereich und Außenumfangsdichtbereich ringförmig.

Weiterhin bildet die den Fluidkanal ausbildende Innenwand des Fluidkanalgehäuses bevorzugt mindestens einen Erweiterungsbereich aus, der, wenn der Ventilkörper innenumfangsseitig desselben und damit in der offenen Stellung angeordnet ist, ein Vorbeiströmen von Fluid erlaubt. Bevorzugt weist er eine bevorzugt seitliche Öffnung (senkrecht zu der Ventilkörperachse) in einen Einlass oder einen Auslass auf. Eine Projektion der Innenwand des Erweiterungsbereichs auf die obige Projektionsfläche umschreibt die Projektion des Innenumfangsdichtbereichs.

Bevorzugt umschreibt ein Querschnitt des Erweiterungsbereichs senkrecht zu der Axialrichtung den Querschnitt des Innenumfangsdichtbereichs senkrecht zu der Axialrichtung. Der Querschnitt des Innenumfangsdichtbereichs umschreibt bevorzugt den Querschnitt des Außenumfangsdichtbereichs.

In der offenen Stellung des Ventilkörpers ist der Außenumfangsdichtbereich in der Axialrichtung bevorzugt mit Abstand zu dem Innenumfangsdichtbereich und in der Radialrichtung, die senkrecht zu der Axialrichtung verläuft, bevorzugt mindestens teilweise mit Abstand zu dem Erweiterungsbereich angeordnet, so dass ein Fluid zwischen dem Außenumfangsdichtbereichs des Ventilkörpers und der Innenwand des Fluidkanalgehäuses am Ventilkörper vorbei strömbar ist. Bevorzugt wird in dieser Stellung ein Ringraum zwischen Außenumfangsdichtbereich und Erweiterungsbereich ausgebildet. Hierdurch kann beim Vorbeiströmen am Dichtteller eine Verwirbelung verringert werden und Strömungsberuhigung erfolgen. Bevorzugt ist der Erweiterungsbereich gegenüber dem Innenumfangsdichtbereich ringförmig mit gerundeter Innenkontur erweitert.

In der geschlossenen Stellung überlappt der Außenumfangsdichtbereich, gesehen senkrecht zu der Axialrichtung, mit dem Innenumfangsdichtbereich, so dass kein oder wenig Fluid zwischen dem Außenumfangsdichtbereich und der Innenwand des Fluidkanalgehäuses am Ventilkörper vorbei strömbar ist.

Bevorzugt wird der Außenumfangsdichtbereich durch den Außenrand eines schräg oder senkrecht zu der Bewegungsachse angeordneten Tellers oder irgendwie gearteten Körpers ausgebildet, der sich ausgehend von einer Ventilkörperachse erstreckt. Der Innenumfangsdichtbereich ist entsprechend komplementär in der Innenwand des Fluidkanalgehäuses ausgebildet.

Bevorzugt weist der Ventilkörper einen sich entlang der Bewegungsachse erstreckenden Schaft auf, an dem eine bevorzugt geradzahlige Anzahl von Dichttellern (Ventiltellern) ausgebildet oder angebracht sind. Der Schaft kann aus einem oder mehreren Elementen ausgebildet sein, die jeweils mit einem oder mehreren der Dichtteller verbunden sind oder integral mit diesen ausgebildet sind. Es können ein oder mehrere Dichtteller vorgesehen sein. Die Dichtteller sind bevorzugt strömungsoptimiert ausgebildet.

Die Innenwand des Fluidkanalgehäuses weist bevorzugt eine entsprechende Anzahl an Innenumfangsdichtbereichen auf. Bevorzugt ist jeweils oberhalb und unterhalb jedes Innenumfangsdichtbereichs je ein Erweiterungsbereich vorgesehen. Zwischen zwei Innenumfangsdichtbereichen ist also bevorzugt ein Erweiterungsbereich vorgesehen. Von jeweils benachbarten Erweiterungsbereichen ist bevorzugt jeweils einer seitlich zu der Einlassseite und der jeweils andere seitlich zu der Auslassseite des Ventils geöffnet.

Die Anzahl der Dichtteller und Innenumfangsdichtbereiche ist bevorzugt strömungstechnisch optimiert beispielsweise in Abhängigkeit des Höhen-/Breitenverhältnisses des Zylinderkopfkanals. Bei Höhen/Breitenverhältnisse <=2 ist die Kombination mit vier Tellern/Ventilkörper mit drei zum Einlass geöffneten Erweiterungsbereichen und zwei zum Auslass geöffneten Erweiterungsbereichen vorteilhaft. Bei Verhältnissen >2 ist die Telleranzahl, bei dann reduziertem Ventilhub bevorzugt zu vergrößern.

Bei in der geschlossenen Stellung befindlichen Ventilkörper, wird in einer Querschnittsansicht bevorzugt eine Wand ausgebildet, die im Wesentlichen die Form einer Rechteckwelle hat. Die Wand ist aus den Dichttellern, den Innenwandbereichen, die die Innenumfangsdichtbereiche ausbilden, und den Innenwandbereichen, die die Innenumfangsdichtbereiche miteinander verbinden, ausgebildet.

Bei dem so ausgebildeten Ventil wird ein Fluidstrom bei in der offenen Stellung befindlichen Ventilkörper in mehrere, der Anzahl der Dichtteller entsprechende Fluidteilströme aufgespalten, wobei jeder Fluidteilstrom durch einen der Dichtteller versperrbar ist. Da benachbarte Dichtteller jeweils in entgegengesetzten Richtungen angeströmt werden, heben sich die insgesamt auf den Ventilkörper in der Axialrichtung aufgebrachten Kräfte im Wesentlichen auf. Die mehreren Dichtteller und deren gemeinsame Bewegung erlauben ein im Wesentlichen drosselfreies und schnelles Öffnen des Fluidkanals.

Bevorzugt ist weiter ein elektronisches Positionsbestimmungsmittel vorgesehen, mit dem die Position des Ventilkörpers oder des Aktuators bezüglich des Fluidkanalgehäuses bzw. Aktuatorgehäuses bestimmbar ist. Das elektronische Positionsbestimmungsmittel ist bevorzugt mindestens eines aus einem Linearer-Variabler-Differenzial-Transformator-Sensor (LVDT-Sensor), ein Hall-Sensor oder einer Software, die eine Positionsbestimmung basierend auf einer Spulenstromverlaufskurve der Magnetspule und/oder auf einer Auswertung eines Magnetfeldänderungsverlaufs vornimmt. Das Positionsbestimmungsmittel ist bevorzugt an dem dem Aktuator entgegengesetzten Ende des Ventilkörpers vorgesehen. Alternativ kann das Positionsbestimmungsmittel, je nach Platzverhältnissen, auch auf der Aktuatorseite vorgesehen sein, beispielsweise auf der dem Fluidkanalgehäuse abgewandten Rückseite des Aktuators oder zwischen Aktuator und Fluidkanalgehäuse. Es kann auch eine softwaretechnische Positionsbestimmung über die Magnetspule zusätzlich zu einem weiteren Positionsbestimmungsmittel, welches beispielsweise an dem dem Aktuator entgegengesetzten Ende des Ventilkörpers vorgesehen ist, erfolgen.

Ein LDVT Sensor ermöglicht durch eine hochpräzise Auflösung des Ventilhubs eine hochpräzise Steuerung der Ventilposition. Zwischen maximal offen und maximal geschlossen können im Zusammenspiel von Aktuator und LVDT-Sensor alle Ventilstellungen mit einer Genauigkeit und Reproduzierbarkeit eingestellt und eingeregelt, sowie dauerhaft gehalten werden. Damit kann nicht nur ein motorzyklusorientierter Betrieb im gesamten Motorkennfeld mit öffnen und schließen des Ventils pro Motorzyklus gewährleistet werden, sondern das Ventil kann auch mit jeder festen Stellung zwischen "Offen" und "Geschlossen" als Konstant-Drosselventil zur Laststeuerung des Verbrennungsmotors im gesamten Motorkennfeld eingesetzt werden. Weiterhin erlaubt ein LDVT Sensor die Reduzierung der Masse und des VolumensBauraum der Positionsbestimmungsmittel, die gemeinsam mit der Ventilachse bewegt werden, was zu einer geringeren Neigung zum Überschwingen und zu einer Reduzierung des Energieaufwands zum Beschleunigen/Abbremsen des Ventilkörpers führt.

Ein Hall-Effekt Sensor ist eine vorteilhafte Ausführung im Hinblick auf die Kosten mit ggfs. geringerer Positionsgenauigkeit. Bevorzugt kommt ein Hall-Effekt Sensor nur bei Betriebsdrehzahlen des Motors kleiner 5000 U/min zur Anwendung. Die Position der Permanentmagnete, die zur Anwendung des Hall-Positionsmesssystems notwendig sind, können sich dabei auf der sich bewegenden Ventilachse sowie mitbewegten Bauteilen befinden oder gehäusefest montiert sein, wobei die Position der Permanentmagneten dann gehäusefest außerhalb der sich bewegenden Ventilachse angeordnet sind. Der dritte Permanentmagnet kann als Permanentmagnet des Hall-Messsystems genutzt werden. Das/Die Hall-Sensor Messelement(e) können gehäusefest außerhalb der bewegten Ventilachse angeordnet sein, als auch gehäusefest innerhalb einer hohlen Ventilachse angeordnet sein.

Die angeführten möglichen Positionen der Messsystemkomponenten gelten ebenfalls für alternative Messsysteme bei denen eine Aufteilung in bewegte und nicht bewegte Komponenten besteht.

Prinzipiell ist bevorzugt jedes berührungslos arbeitende Positionsbestimmungsmittel zur Ventilpositionsermittlung geeignet, da berührungslos arbeitende Systeme weitestgehend verschleißfrei arbeiten und somit den Lebensdauererwartungen bei Verbrennungsmotoren genügen. Als Alternativen sind vorzugsweise lasertechnische und weitere optisch wirkende Systeme, sowie kapazitiv oder magnetisch wirkende Systeme zu nennen. Der Einsatz richtet sich dabei nach Bauraumvorgaben, Motordrehzahlanforderungen, Positionsgenauigkeitsanforderungen, sowie Baukosten.

Softwaretechnische Positionsermittlung kann beispielsweise durch Auswertung der Spulenstromverlaufskurve des elektromagnetischen Aktuators oder durch einen Algorithmus, der den Spulenstrombedarf auf die Ventilachsenposition bezieht oder durch Auswertung des Magnetfeldänderungsverlaufs in Abhängigkeit der Position des bewegten dritten Permanentmagneten des elektromagnetischen Aktuators erfolgen.

Bevorzugt ist das Ventil so ausgebildet, dass mittels einer Positionssteuerung oder einer Positionsregelung (basierend auf Signalen von dem Positionsbestimmungsmittel) innerhalb des realisierbaren Hubs jegliche Position reproduzierbar angefahren und gehalten werden kann.

Bevorzugt ist das Ventil so ausgebildet, dass ein erneutes Anfahren derselben Position bei Verwendung von Hall-Sensoren bevorzugt mit einer Genauigkeit von +/- 150 Mikrometer und bei Verwendung von LVDT Sensoren mit einer Genauigkeit von+/- 50 Mikrometer erreicht wird.

Bevorzugt kann die Position einer Referenzstelle des Ventilkörpers zu einer gehäusefesten Bezugskante permanent (online) über den Hall,- bzw. LVDT Positionssensor ermittelt und an eine Ventilsteuerungselektronik zur Auswertung weitergeleitet werden. Bevorzugt können in dem Fall, in dem von den Soll-Positionsvorgaben abweichende kritische Betriebszustände ermittelt werden, diese an eine übergeordnete Motorsteuerung über eine Datenleitung, beispielsweise einen CAN-Bus, kommuniziert und dort weiterverarbeitet werden. Eine Parametrierung der Positionsgenauigkeit und der Referenzposition des bewegten Ventiltellers zu einer gehäusefesten Bezugskante kann über CAN oder CCP erfolgen.

Der Ventilkörper und/oder das Ventilverbindungsglied sind bevorzugt über ein oder mehrere Gleitlager in dem Fluidkanalgehäuse bzw. Aktuatorgehäuse gelagert. Bevorzugt ist der Ventilschaft auf der Seite des Aktuators in dem Spulenträger gelagert und ist der Spulenträger in das Fluidkanalgehäuse eingesetzt. Bevorzugt ist der Ventilschaft auf der dem Aktuator entgegengesetzten Seite in einem Positionsbestimmungsmittelträger gelagert und ist der Positionsbestimmungsmittelträger in das Fluidkanalgehäuse eingesetzt. Bevorzugt ist das Lagerspiel (Spaltmaß) der Lagerung des Ventilschafts kleiner als das Spiel bzw. der Abstand (Spaltmaß) zwischen Außenumfangsdichtbereich und Innenumfangsdichtbereich, so dass unabhängig von der Lagerposition des Ventilschafts eine axiale Bewegung des Ventilschafts möglich ist.

Bevorzugt erfolgt die Lagerung des Ventilschafts über geschlitzte Lager mit negativem Spiel. Damit ist ein spielfreier Lauf der Ventilschafts in den Lagestellen gewährleistet. Des Weiteren kann bei einem Kunststofflager hierdurch bevorzugt eine Kompensation der im allgemeinen großen Wärmeausdehnungskoeffizienten von Kunststoffen im Vergleich zu Stahl, NE-Metallen und Aluminium erfolgen. Der Lagersitz bevorzugt aus Aluminium bzw. Stahl hat kleinere Ausdehnungskoeffizienten und wächst daher weniger stark im Durchmesser. Ein geschlossenes Kunststofflager, eingebaut in einen Stahl- oder Aluminium Lagersitz würde demnach ausschließlich Freiraum hin zum Mittelpunkt des Lagers haben und das Betriebslaufspiel der Kombination aus Lager und Welle/Achse auf unzulässige Werte, bis hin zum Klemmen, verringern. Eine geschlitzte Ausführung löst dieses Problem durch den Freiheitsgrad in Umfangsrichtung des Lagers.

Alternativ kann ein positives Lagerspiel bestehen, wobei gilt, dass das Lagerspiel (das Spaltmaß) kleiner sein muss als das Spiel (Spaltmaß) zwischen den Außen- und Innenumfangsdichtbereichen des Ventils um Klemmen zu vermeiden.

Die Höhe des Lagers in der Axialrichtung beträgt bevorzugt 75-85% des inneren Lagerdurchmessers. Die Materialstärke (Wandstärke) des Lagers beträgt bevorzugt zwischen 0,9 und 1,5 mm in Abhängigkeit von Lager-Schlitzbreite, Wärmedehnungskoeffizienten der Paarungen Lagerwerkstoff zu Lagergehäuse, sowie des einzuhaltenden Betriebstemperaturbereiches. Der Temperaturbereich ist bevorzugt bei -40 - 125 Grad Celsius Betriebstemperatur anzusiedeln.

Bevorzugt wird das Lager auf Basis von ZEDEX530 Kunststoffmaterial ausgeführt. Bevorzugt erfolgt die Lagerung schmiermittelfrei, insbesondere bei Anwendung in Ansaugkanälen von Brennkraftmaschinen.

Bevorzugt ist jeweils ein Lager in den Positionsbestimmungsmittelträger und ein Lager in den Spulenträger eingesetzt. Es sind auch mehrere Lagerpositionen (2-fach, 3-fach, 4-fach) möglich. Dabei richtet sich die Anzahl der Lagerstellen bevorzugt nach der Gesamtlänge der zu lagernden Ventilachse. Hierbei spielen beispielsweise das Breiten /Höhenverhältnis einer Zylinderkopf-Eintrittskanalöffnung sowie allgemein die Skalierung des Ventils auf unterschiedliche Motorengrößen mit unterschiedlichen Einzelzylindervolumina eine maßgebliche Rolle. Für den Fall, das ein Ventilhub von maximal 7mm bei einer Kanalhöhe von maximal 70 mm benötigt wird, stellt eine 2-fach Lagerung und eine 3-fach Lagerung eine vorteilhafte Lösung dar. Bei länger werdenden Ventilachsen lassen sich die erforderlichen Ventiltoleranzen bezüglich der Geradheit der Achsen nicht mehr mit vertretbarem Aufwand realisieren. Hier ist eine Aufteilung der Achse in einen Aktuatoranteil (=Verbindungsbauteil) und einen Ventilanteil (Ventilkörper) mit jeweils 2-fach Lagerung vorteilhaft. Aktuator und Ventilkörper werden dann über ein Kupplungsglied miteinander verbunden.

Bevorzugt ist mindestens einer der Permanentmagnete des elektromagnetischen Aktuators aus einer Neodyniumzusammensetzung ausgebildet, welche bevorzugt mit einer NiCuNi Beschichtung versehen ist.

Die Neodyniumzusammensetzung ist bevorzugt derart ausgebildet, dass die magnetischen Eigenschaften in einem Temperaturbereich von -40 Grad Celsius bis 125 Grad Celsius, bevorzugt 150 Grad Celsius, noch bevorzugter 200 Grad Celsius erhalten bleiben. Beispielsweise wächst die Temperaturbeständigkeit mit dem Bor-Anteil im Magnetmaterial. Verwendete Magneten sind beispielsweise NdFeB Neodynium Magneten, Typ N38EH, NiCuNi coated, Alloy: Re2Tm 14B.

Der Kraftverstärkungsring weist bei einem bevorzugten maximalen Ventilhub von 10 mm eine Höhe in der Axialrichtung von bevorzugt 2 mm bis 10 mm, noch bevorzugter von 3 mm bis 8 mm und noch bevorzugter von 4,5mm bis 7,5mm auf.

Bevorzugt beträgt ein Ringspalt zwischen dem Kraftverstärkungsring und dem bewegten dritten Permanentmagneten (Ankermagneten) bei einem bevorzugt maximalen Ventilhub von 10 mm bevorzugt 0,1 mm bis 4 mm, noch bevorzugter von 0,3 mm bis 2 mm und noch bevorzugter 0,5 mm bis 1 mm.

Der dritte Permanentmagnet ist bevorzugt ausgehend von der Position im spannungsfreien Zustand der Magnetspule durch unterschiedliche Polarität der Spannung sowohl in die eine Axialrichtung als auch die andere Axialrichtung auslenkbar.

Die Dichtteller mit den Außenumfangsdichtbereichen können zueinander unterschiedliche Formen aufweisen.

Das Ventil ist bevorzugt derart ausgebildet, dass bei einem maximalen Ventilhub (zwischen der geschlossenen Position und der maximal geöffneten Position) von bevorzugt 10 mm eine Umschaltung von der geschlossenen Stellung (Schließposition) in die maximal geöffnete Position (maximal offene Stellung) und umgekehrt, in bevorzugt weniger als 100 Millisekunden, noch bevorzugter weniger als 50 Millisekunden und noch bevorzugter weniger als 10 Millisekunden erfolgt. Bevorzugt werden die Werte unabhängig von der Raumorientierung des Ventils erreicht. Abhängig von der Raumorientierung kann die Umschaltung in eine Richtung schneller als in die andere Richtung sein. Längere Schließzeiten wirken sich bei steigender Motordrehzahl thermodynamisch ungünstig auf die erreichbare und angestrebte Motor-Effizienzsteigerung aus, da sich mit zunehmender Motordrehzahl, ein zunehmender Konstantdrosselanteil während des Schließvorganges einstellt.

Bevorzugt ist ein Spaltdichtungsverhältnis als das Verhältnis der Dicke des Außenumfangsdichtbereichs des Ventilkörpers in der Axialrichtung zu der Dicke des Innenumfangsdichtbereichs in der Axialrichtung definiert. Dieses Verhältnis bestimmt neben dem radialen Spiel zwischen Innenumfangsdichtbereich und Außenumfangsdichtbereich die Leckage des Ventils. Die Breite des Innenumfangsdichtbereichs ist bevorzugt 1 mm bis 3 mm. Höhere Werte verringern den Durchfluss durch das Ventil, da der effektive Austrittsquerschnitt zum Zylinderkopf verengt wird. Bevorzugt ist beispielsweise eine Kombination von 1,8 mm Dicke Innenumfangsdichtbereich und 1,4 mm Dicke Außenumfangsdichtbereich bewährt.

Ein Radialspiel (Spaltmaß) zwischen Außenumfangsdichtbereich und Innenumfangsdichtbereich beträgt bevorzugt weniger als 100 Mikrometer, noch bevorzugter weniger als 70 Mikrometer und noch weniger als 50 Mikrometer. Bevorzugt beträgt das Radialspiel 20, 30 oder 40 Mikrometer mit dem obigen Spaltdichtungsverhältnis.

Eine bevorzugte Hubkolbenbrennkraftmaschine weist das elektromagnetisch betätigte Ventil beispielsweise zur Realisierung einer vorteilhaften Ladungssteuerung auf, wie sie in der WO 00/03131 A1 gelehrt wird. Hierfür ist das Ventil, wie das Drehschieberventil in der WO 00/03131 A1, bevorzugt im Einlasskanal stromaufwärts eines herkömmlichen Einlassventils an Stelle einer Drosselklappe vorgesehen. Bevorzugt wird durch zielgerichtetes Öffnen und Schließen des Ventils eine Teillastresonanzaufladung erreicht, die zu einer Effizienzverbesserung führen kann. Durch den verschleißfreien Betrieb und die Möglichkeit der präzisen und schnellen Steuerung bringt die Verwendung des oben angegeben Ventils zur Ladungssteuerung signifikante Vorteile.

Alternativ oder zusätzlich kann das elektromagnetisch betätigte Ventil in einen Abgasrückführungskanal zur Steuerung des Abgasrückführungsstroms eingesetzt werden.

Bevorzugt kann mit dem Einsatz des Ventils im Einlasskanal bzw. Ansaugkanal eine Limp-Home- oder Fail-Safe-Funktion dargestellt werden. Zur Realisierung der Fail-Safe-Funktion ist das Ventil derart ausgebildet, dass im spannungsfreien Zustand, der Ventilteller auf der Cutting Edge steht. Cutting Edge bezeichnet die Situation, wo in Schließrichtung betrachtet, der Rand des Außenumfangsdichtbereichs erstmals in Überlappung mit dem ihm zugewandten Rand des Innenumfangsdichtbereichs kommt. Ein Durchfluss durch das Ventil ist damit gerade nicht mehr möglich. Zur Realisierung der Limp-Home Funktion ist das Ventil so ausgebildet, dass im spannungslosen Zustand eine Ventilstellung mit einem vorbestimmter Öffnungsspalt bestehen bleibt, der einen Verbrennungsluft/Verbrennungsgemisch - Durchfluss realisiert, der eine vorbestimmte Drehmomentabgabe des Motors ermöglicht (Notlauf-Funktion). Beispielsweise ist der Ventilöffnungsgrad in der Limp-Home-Position auf 1 % oder 5% oder 10% bezogen auf den maximalen Öffnungsgrad von 100% festgelegt.

Die vorliegende Offenbarung betrifft nach einem weiteren Aspekt eine Hubkolbenbrennkraftmaschine mit dem elektromagnetisch betätigten Ventil, bei der bevorzugt in einem ersten Betriebszustand das in der Hubkolbenbrennkraftmaschine verbaute elektromagnetisch betätigte Ventil sich einmal je Motorzyklus öffnet und schließt, und in einem weiteren Betriebszustand das Ventil über mindestens einen Motorzyklus in der geschlossenen Stellung oder einer bestimmten (beliebig einstellbaren) offenen Stellung gehalten wird, und bevorzugt das Ventil jederzeit zwischen den Betriebszuständen umschaltbar ist, auch zwischen den Zyklen.

Weiterhin betrifft die Offenbarung nach einem weiteren Aspekt eine Hubkolbenbrennkraftmaschine mit dem elektromagnetisch betätigten Ventil, bei der, wenn ein zykluskonsistenter Betrieb beim Erreichen der maximalen Drehzahl für eine Situation, in der innerhalb eines Motorzyklus von Leerlauf nach 100% Last und umgekehrt geschaltet werden muss, nicht mehr durchführbar ist, dann bevorzugt aufgrund der bereits hohen Drehzahl ein Betrieb als Konstantdrossel mit FES (Frühes Einlass Schließt) und Millerverfahren möglich ist, wobei die Entscheidung über das Betriebsverfahren bevorzugt im Zusammenhang mit der übergeordneten Motorsteuerung unter Berücksichtigung eines leistungs- und verbrauchsoptimalen Motorbetriebs erfolgt.

Gemäß einem weiteren Aspekt wird eine Hubkolbenbrennkraftmaschine mit bevorzugt mehreren Zylindern und bevorzugt mehreren Einlasskanälen angegeben, bei der bevorzugt jeder der Einlasskanäle mit dem oben angegebenen elektromagnetisch betätigten Ventil ausgerüstet ist.

Weiterhin wird unabhängig zu den übrigen Aspekten gemäß einem weiteren Aspekt eine Hubkolbenbrennkraftmaschine angegeben, die bevorzugt aufweist
wenigstens ein Motorgehäuse mit einem darin ausgebildeten Zylinder, in dessen Zylinderinnenraum ein mit einer Kurbelwelle verbundener Kolben arbeitet, welcher Zylinder wenigstens eine Einlassöffnung, in der ein bevorzugt entsprechend der Drehung der Kurbelwelle öffnendes und schließendes Einlassventil arbeitet, das den Zylinderinnenraum zeitweilig mit einem in der Einlassöffnung endenden und in dem Motorgehäuse ausgebildeten Ansaugkanal verbindet, und wenigstens eine Auslassöffnung aufweist, in der ein entsprechend der Drehung der Kurbelwelle öffnendes und schließendes Auslassventil arbeitet, das den Zylinderinnenraum zeitweilig mit einem von der Auslassöffnung ausgehenden Abgaskanal verbindet,
ein Ansaugkanalventil, das an dem Motorgehäuse angebracht ist, dessen Auslass in dem Ansaugkanal mündet, und das zum wahlweisen Verschließen des Ansaugkanals ausgebildet ist, und
ein Steuergerät, das das Ansaugkanalventil in Abhängigkeit wenigstens von einem Leistungsanforderungsglied der Hubkolbenbrennkraftmaschine derart ansteuert, dass der Schließzeitpunkt des Ansaugkanalventils bei abnehmender Leistungsanforderung zunehmend vor dem Schließzeitpunkt des Einlassventils liegt,
bei der bevorzugt
ein Volumen des zwischen dem geschlossenen Ansaugkanalventil und dem Einlassventil gebildeten Kanalabschnitts kleiner als 40%, bevorzugt kleiner 30% und noch bevorzugter kleiner 20% des Kolbenhubvolumens (Volumen der angesaugten Frischladung) ist, und/oder
das Ansaugkanalventil auf seiner dem Einlassventil zugewandten Seite (in seinem Auslass) einen Strömungskeil aufweist, der im eingebauten Zustand des Ansaugkanalventils (am Motorgehäuse montierter Zustand) in den Ansaugkanal in dem Motorgehäuse hineinragt und dadurch ein Volumen des Kanalabschnitts zwischen dem geschlossenen Ansaugkanalventil und dem Einlassventil teilweise ausfüllt, und/oder
das Ansaugkanalventil auf seiner dem Einlassventil zugewandten Seite (auf der Seite des Auslassen) über ein Zwischenbauteil mit dem Motorgehäuse verbunden ist, wobei das Zwischenbauteil einen Kanalabschnitt ausbildet, der den Auslass des Ansaugkanalventils mit dem Ansaugkanal verbindet, und das Ansaugkanalventil auf seiner dem Einlassventil zugewandten Seite einen Strömungskeil aufweist, der im am Motorgehäuse montierten Zustand des Ansaugkanalventils in den Kanalabschnitt innerhalb des Zwischenbauteils und/oder in den Ansaugkanal in dem Motorgehäuse hineinragt und dadurch ein Volumen des Kanalabschnitts zwischen dem geschlossenen Ansaugkanalventil und dem Einlassventil teilweise ausfüllt.

Alternativ und/oder zusätzlich kann der Strömungskeil beispielsweise in dem Zwischenbauteil vorgesehen oder in diesem ausgebildet oder daran befestigt sein und ausgehend von dem Zwischenbauteil in den Ansaugkanal in dem Motorgehäuse hineinragen und dadurch ein Volumen des Kanalabschnitts zwischen dem geschlossenen Ansaugkanalventil und dem Einlassventil teilweise ausfüllen.

Es können ein oder mehrere Strömungskeile vorgesehen sein. Der oder die Strömungskeile können am Ansaugkanalventil montiert sein oder angebracht sein oder integral mit dem Gehäuse des Ansaugkanalventils ausgebildet sein. Die Strömungskeile können einteilig oder mehrteilig ausgebildet sein.

Es können ein oder mehrere Zwischenbauteile vorgesehen sein. Das oder die Zwischenbauteile bilden innenseitig einen Kanal, bevorzugt mit rundem Querschnitt, aus. Das oder die Zwischenbauteile werden bevorzugt über das Ansaugkanalventil oder über zusätzliche Befestigungsmittel an dem Motorgehäuse bzw. zwischen dem Motorgehäuse und dem Ansaugkanalventil befestigt. Es kann ein Ansaugkanalbauteil ausgebildet sein, dass einen Kanal ausbildet, der den Auslass des Ansaugkanalventils mit dem Ansaugkanal in dem Motorgehäuse verbindet. Der Strömungskeil am Ventil und/oder dem Zwischenbauteil kann in den Kanal vorstehen und ein Teil seines Innenvolumens einnehmen.

Das Einlassventil und das Ansaugkanalventil können hier als herkömmliche Ventile ausgebildet sein. Beispielsweise ist das Einlassventil nockengesteuert oder elektromagnetischer Bauart. Das Ansaugkanalventil ist beispielsweise als elektrisches Drehschieberventil oder ähnlich ausgebildet. Gemäß einer bevorzugten Alternative ist das Ansaugkanalventil als anschlagfreies elektromagnetisch betätigtes Ventil, wie oben beschrieben, ausgebildet.

Es hat sich herausgestellt, dass die Teillastresonanzaufladung weiter verbessert werden kann, wenn das gesamte Volumen zwischen dem geschlossenen Ansaugkanalventil und dem (primärem) Einlassventil minimiert wird. Dieses sogenannte Totvolumen zwischen dem geschlossenen Ansaugkanalventil und dem geschlossenen Einlassventil beinhaltet nach Abschluss des Ladungswechsels eine Gemischmasse, die beim folgenden Motorzyklus wieder durch den Motor angesaugt wird. Dementsprechend wird die für den folgenden Motorzyklus bevorzugt notwendige Gemischmasse um diesen Anteil reduziert. Dieses bedeutet, dass sich die Dauer des ungedrosselten Ansaugvorganges in jedem Motorbetriebspunkt auch als eine Funktion des Totvolumens darstellt. Die thermodynamisch günstigste Situation ergibt sich, wenn das Totvolumen, und damit der Raum zwischen dem geschlossenen primären Einlassventil und dem Ansaugkanalventil zu Null wird.

Mechanismen, die das Totvolumen mit Frischgemisch auffüllen, sind das Überschieben von Frischgemisch während des Kompressionshubes solange das Einlassventil noch geöffnet ist (Einlass schließt x Grad Kurbelwinkel nach dem unteren Totpunkt). Weiter wird das Totvolumen durch Leckage und das Einströmen von Frischgemisch über das geschlossene Ansaugkanalventil gefüllt.

Eine Grenzsituation ergibt sich für die Einhaltung eines stabilen geregelten Motor-Leerlauf bei niedrigst möglicher Leerlaufdrehzahl, wenn sich im Totvolumen mehr Gemischmasse befindet, als für den folgenden Leerlaufzyklus benötigt wird. Aus diesem Grunde darf das Totvolumen für einen geregelten Leerlaufbetrieb bevorzugt maximal 40%, noch bevorzugter maximal 30% des Hubvolumens betragen. Höhere Volumina erhöhen die Leerlaufdrehzahl, bzw. machen die Anwendung des Konstantdrosselbetriebes mit höheren Leerlaufverbrauchswerten notwendig.

Strömungskeile, die bevorzugt Bestandteil des Ansaugkanalventils sind, können in Abhängigkeit von der Kanalform und des Kanalverlaufs im Zylinderkopf variabel in Keilwinkel, Länge und Formgebung gestaltet werden. Diese reduzieren das Totvolumen zwischen Ansaugkanalventil und primärem Einlassventil.

Die Strömungskeile können in einer bevorzugten Ausführungsform gemäß einem weiteren Aspekt auch derart gestaltet werden, dass eine Brenngaszuführung in den Kanalabschnitt zwischen dem Ansaugkanalventil und dem Einlassventil durch das Fluidkanalgehäuse und die Strömungskeile hindurch erfolgt, bevorzugt direkt und unter Vermeidung einer Adapterplatte zwischen dem Fluidkanalgehäuse und Zylinderkopf. Diese Maßnahme vermindert ebenfalls das Totvolumen signifikant. Es können mehrere Kanäle getrennt für oberhalb und unterhalb des Keils vorgesehen sein. Der oder einer der Kanäle kann sich im spitzen Keilende öffnen.

Gemäß einem weiteren Aspekt wird eine Hubkolbenbrennkraftmaschine angegeben, bei der
der in den Kanalabschnitt endende Brenngaszuführungskanal sich bevorzugt in einem dem Einlassventil zugewandten (bzw. einer stromabwärtigen) Ende des Strömungskeils in den Kanalabschnitt öffnet, oder
der in den Kanalabschnitt endende Brenngaszuführungskanal sich bevorzugt verzweigt und mit zwei schräg in den Kanalabschnitt mündenden Öffnungen ausgebildet ist.

Gemäß einem weiteren Aspekt wird eine Hubkolbenbrennkraftmaschine angegeben, bei der das Steuergerät bevorzugt derart ausgebildet ist, dass das Ansaugkanalventil bei noch geschlossenem Einlassventil öffnet, derart, dass eine sich infolge eines in dem Kanalabschnitt zwischen dem Ansaugkanalventil und dem Einlassventil vorhandenen Unterdrucks ausbildende Druckwelle nach Reflexion am offenen Ansaugrohrende das Einlassventil zu einem Zeitpunkt erreicht, zu dem dieses gerade öffnet, so dass die vom Kolben zu leistende Ansaugarbeit vermindert wird.

Gemäß einem weiteren Aspekt wird eine Hubkolbenbrennkraftmaschine angegeben, bei der
als das genannte Ansaugkanalventil bevorzugt das oben beschriebene anschlagfreie elektromagnetisch betätigte Ventil nach einem der Ansprüche oder Aspekte ausgebildet ist.

Gemäß einem weiteren Aspekt beträgt eine wirksame maximale Durchlassöffnung des elektromagnetisch betätigten Ventils (also die Querschnittsfläche, die einer Strömung durch das Ventil in der geöffneten Stellung zur Verfügung steht) bevorzugt zwischen 70% und 250 % der Kanalquerschnittsfläche, die durch das Ventil verschlossen wird, insbesondere der Kanalquerschnittsfläche unmittelbar vor oder hinter dem elektromagnetisch betätigtem Ventil oder der kleinsten Kanalquerschnittsfläche im Verlauf des Kanals. Noch bevorzugter ist die maximale wirksame Durchlassöffnung des Ventils zwischen 80% und 150 % und noch bevorzugter zwischen 90% und 120%, dieser Kanalquerschnittsfläche, wie z.B. 100% oder 110%.

Gemäß einem weiteren Aspekt wird das im Wesentlichen drosselfreie Öffnen und/oder Schlie-ßen des elektromagnetisch betätigten Ventils bevorzugt einerseits durch die Bauart des Ventils und andererseits durch den Aktuator und die Steuerung erreicht. Bezüglich der Bauart werden bevorzugt mehrere Dichtteller an dem Ventilkörper vorgesehen, die gleichzeitig mit der entsprechende Anzahl Innenumfangsdichtbereichen dichten und so gleichzeitig eine entsprechende Anzahl Querschnittsflächen für eine Fluidströmung verschließen und öffnen. Bezüglich Aktuator und Steuerung ist das elektromagnetisch betätigte Ventil (einschließlich Steuergerät und Spannungsquelle) bevorzugt so ausgebildet, dass beim Öffnen des elektromagnetischen Ventils ausgehend von der geschlossenen Stellung ein effektiver Strömungsquerschnitt von 10% bis 90% des Öffnungsquerschnitts des elektromagnetischen Ventils in der geöffneten Stellung innerhalb von bevorzugt 0,5ms bis 10ms, noch bevorzugter zwischen 1ms und 5ms, und noch bevorzugter zwischen 1,5ms und 4ms, wie z.B. 2ms oder 3ms realisiert wird. Bevorzugt wird ausgehend von der geschlossenen Stellung ein effektiver Strömungsquerschnitt von mindestens 50%, noch bevorzugter mindestens 60% und noch bevorzugter mindestens 70% des Öffnungsquerschnitts des elektromagnetischen Ventils in der geöffneten Stellung innerhalb von bevorzugt 0,5ms bis 10ms, noch bevorzugter zwischen 1ms und 5ms, und noch bevorzugter zwischen 1,5ms und 4ms, wie z.B. 2ms oder 3ms realisiert.

Die obenstehenden Werte gelten bevorzugt analog für die Schließbewegung von der geöffneten Stellung in die geschlossene Stellung. Beim Schließen des elektromagnetischen Ventils wird also ausgehend von der geöffneten Stellung ein effektiver Strömungsquerschnitt von 10% bis 90% des Öffnungsquerschnitts des elektromagnetischen Ventils in der geöffneten Stellung innerhalb von bevorzugt 0,5ms bis 10ms, noch bevorzugter zwischen 1ms und 5ms, und noch bevorzugter zwischen 1,5ms und 4ms, wie z.B. 2ms oder 3ms realisiert. Bevorzugt wird ausgehend von der geöffneten Stellung ein effektiver Strömungsquerschnitt von höchstens 50%, noch bevorzugter höchstens 40% und noch bevorzugter höchstens 30% des Öffnungsquerschnitts des elektromagnetischen Ventils in der geöffneten Stellung innerhalb von bevorzugt 0,5ms bis 10ms, noch bevorzugter zwischen 1ms und 5ms, und noch bevorzugter zwischen 1,5ms und 4ms, wie z.B. 2ms oder 3ms realisiert.

Gemäß einem weiteren Aspekt ist das elektromagnetisch betätigte Ventil (einschließlich Steuergerät und Spannungsquelle) bevorzugt so ausgebildet, dass eine komplette Bewegung von der geöffneten in die geschlossene Stellung oder umgekehrt zwischen 1,7ms und 15ms, noch bevorzugter zwischen 4ms und 13ms benötigt, wie z.B. 10ms oder 12ms.

Gemäß einem weiteren Aspekt wird eine Hubkolbenbrennkraftmaschine angegeben, die bevorzugt das oben angegebene elektromagnetisch betätigten Ventil und wenigstens ein Zylinder mit einem Zylinderinnenraum, in dem ein mit einer Kurbelwelle verbundener Kolben arbeitet, welcher Zylinder wenigstens eine Einlassöffnung, in der ein entsprechend der Drehung der Kurbelwelle öffnendes und schließendes Einlassventil arbeitet, das den Zylinderinnenraum zeitweilig mit einem in der Einlassöffnung endenden Ansaugkanal verbindet, und ein Steuergerät aufweist, bei der bevorzugt
das elektromagnetisch betätigte Ventil in dem Ansaugkanal angeordnet ist,
das Steuergerät so ausgebildet, dass es das elektromagnetisch betätigte Ventil bevorzugt (in mindestens einem Betriebszustand) in Abhängigkeit wenigstens von einem Leistungsanforderungsglied der Hubkolbenbrennkraftmaschine derart ansteuert, dass der Schließzeitpunkt des elektromagnetisch betätigten Ventils bei abnehmender Leistungsanforderung zunehmend vor dem Schließzeitpunkt des Einlassventils liegt, und
die Hubkolbenbrennkraftmaschine im Miller-Zyklus (frühes Schließen des Einlassventils) und/oder im Atkinson-Zyklus (spätes Schließen des Einlassventils) betreibbar ist, wobei die Entscheidung über das Betriebsverfahren (den Zyklus) bevorzugt im Zusammenhang mit der übergeordneten Motorsteuerung unter Berücksichtigung eines leistungs- und verbrauchsoptimalen Motorbetriebs erfolgt. Der Schließzeitpunkt des elektromagnetisch betätigten Ventils liegt im jeweiligen Zyklus je nach aktueller oder genereller Anforderung vor oder nach oder im unteren Totpunkt.

Gemäß einem weiteren Aspekt wird beispielsweise eine Hubkolbenbrennkraftmaschine angegeben, die bevorzugt aufweist
ein wie oben angegebenes elektromagnetisch betätigtes Ventil,
wenigstens einen Zylinder mit einem Zylinderinnenraum, in dem ein mit einer Kurbelwelle verbundener Kolben arbeitet, welcher Zylinder wenigstens eine Einlassöffnung, in der ein entsprechend der Drehung der Kurbelwelle öffnendes und schließendes Einlassventil arbeitet, das den Zylinderinnenraum zeitweilig mit einem in der Einlassöffnung endenden Ansaugkanal (oder auch Einlasskanal) verbindet, und
ein Steuergerät
bei der
das elektromagnetisch betätigte Ventil bevorzugt in dem Ansaugkanal (Einlasskanal) angeordnet ist, und
das Steuergerät bevorzugt so ausgebildet ist, dass es das elektromagnetisch betätigte Ventil mindestens in bestimmten Betriebszuständen der Hubkolbenbrennkraftmaschine in vorbestimmter Beziehung (gleichzeitig, früher oder später) zu dem Einlassventil öffnet und schließt. Bevorzugt arbeitet (öffnet und schließt) das elektromagnetisch betätigte Ventil synchron mit der Motordrehzahl.

Gemäß einem weiteren Aspekt ist das oben beschriebene elektromagnetisch betätigte Ventil bevorzugt zum (aktiven und intermittierenden) Regeln oder Steuern eines Luft- oder Gemischstroms, bevorzugt des Ansaugluftstroms oder des Abgasrückführungsluftstroms, einer Hubkolbenbrennkraftmaschine (auch den oben Beschriebenen) ausgebildet.

Gemäß einem weiteren Aspekt bilden den magnetischen Kreis ausbildende Bauteile, insbesondere der Mantel, der Gehäusedeckel und der Spulenträger, bevorzugt einen magnetischen Käfig, mittels dem das Innere des Aktuators gegenüber dem Äußerem zur Vermeidung von Störeinflüssen (beidseitig) abgeschirmt ist.

Gemäß einem weiteren Aspekt ist das Ventil bevorzugt so ausgebildet, dass sich im stromlosen Zustand eine einzige Gleichgewichtslage nur durch die permanentmagnetischen Kräfte einstellt, wohingegen die sich mit eine konstanter Bestromung einstellende Gleichgewichtslage durch die Überlagerung der permanentmagnetischen Kräfte und der elektromagnetischen Kräfte einstellt.

Gemäß einem weiteren Aspekt ist das in eine der oben angegebenen Hubkolbenbrennkraftmaschinen eingebaute elektromagnetisch betätigte Ventil bevorzugt so ausgebildet, dass der Aktuator im Vollastbetrieb mit beispielsweise 24Hz, nur maximal 30 Watt elektrische Leistung zur Betätigung des Ventils benötigt, was sich positiv auf den Gesamtwirkungsgrad der Hubkolbenbrennkraftmaschinen auswirkt.

Gemäß einem weiteren Aspekt kann die Formgebung eines Strömungskeils am Ansaugkanalventil vorgesehenen Strömungskeils beispielsweise derart erfolgen, dass der bewegten Ladung (dem bewegten Gasgemisch) ein bestimmtes Verhalten aufgeprägt wird. Bevorzugt ist der Strömungskeil derart ausgebildet, dass ein drallbehaftetes Strömungsprofil oder ein Tumble-Strömungsprofil erzeugt wird. Bei einer drallbehafteten Strömung entsteht ein Wirbel um die Längsachse des Einlassventils, der sich in den Brennraum fortsetzt. Bei einer Tumble-Strömung entsteht ein walzenförmiger Wirbel im Brennraum, der seine Drehachse im Wesentlichen rechtwinklig zur Zylinderlangsachse hat. Ein Tumble-Wirbel entsteht, wenn die Gestaltung des Strömungskeils derart erfolgt, dass der Bereich oberhalb des Strömungskeils einen größeren Durchsatz als der Bereich unterhalb des Strömungskeils zulässt. Bei einer Drallströmung wäre eine Aufteilung der Strömung durch den Strömungskeil um 90 Grad gedreht. Besonders vorteilhaft ist das elektromagnetisch betätigte Ventil mit Strömungskeil und/oder das Ventil mit Strömungskeil und ein Zwischenbauteil so ausgebildet, dass ein Drall /oder Tumble bei Zylinderköpfen, die über einen sogenannte Füllungskanal (Ansaugkanalabschnitt) verfügen und bei dem der Füllungskanal und/oder die Einlasskanalgestaltung nicht zur Erzeugung einer Drall- oder Tumbleströmung ausgelegt sind, erzeugt wird. Bevorzugt wird also eine Hubkolbenbrennkraftmaschine angegeben, deren Zylinderkopf einschließlich dem im Zylinderkopf ausgebildeten Einlasskanal keine Gestaltung zum Erzeugen einer Drall- oder Tumbleströmung aufweist, im Betrieb aber durch des Strömungskeil ein Drall- oder Tumble-Strömung erzeugt wird. Hierdurch kann mit der (auch nachträglichen) Ausrüstung durch das hier offenbarte Ventil neben den übrigen Vorteilen eine Drall- oder Tumble-Strömung erzeugt werden.

Gemäß einem weiteren Aspekt wird in dem Aktuator eine Magnetspule vorgesehen, die bevorzugt aus Backlackdraht zu einer Luftspule derart gewickelt ist, dass die Spule nach dem Wickeln formstabil ist. Weiterhin ist die so ausgebildete Magnetspule (Luftspule), damit die Magnetspule ihre Wärme im Betrieb gut an den Mantel ableiten und weiterhin an den Kühlkörper ableiten kann, in einer Vergussform unter Vakuum mit einer hoch wärmeleitfähigen Vergussmasse zu einem formbeständigen Spulenblock vergossen. Dadurch werden auch die Endmaße des nun entstandenen Spulenblocks bezüglich innerem und äußerem Durchmesser, sowie der Höhe bestimmt. Die Spule kann damit passgenau und formschlüssig in den Mantel und auf dem Spulenträger positioniert werden.

Es versteht sich von selbst, dass die beschriebenen Merkmale und/oder Aspekte unabhängig voneinander oder frei miteinander kombinierbar sind, solange sie nicht im Widerspruch zueinander stehen. Weiterhin versteht sich von selbst, dass die hier offenbarten durch das Steuergerät realisierten Steuerungsstrategien der Hubkolbenbrennkraftmaschine oder des elektromagnetisch betätigten Ventils bevorzugt in mindestens einem jeweiligen Betriebszustand oder Betriebsbereich der Hubkolbenbrennkraftmaschine vorliegen.

Die Bauteile, die bevorzugt als aus Eisen ausgebildet beschrieben sind, können alternativ aus anderen ferromagnetischen Werkstoffen ausgebildet sein. Eisen ist bevorzugt und als Beispiel genannt. Es können auch Legierungen die mehr oder weniger gute ferromagnetische Eigenschaften aufweisen, verwendet werden.

Mögliche beispielhafte Ausführungsformen und weitere Einzelheiten werden im Folgenden anhand der schematischen Zeichnungen beschrieben, von denen zeigen:
- Fig. 1: eine Querschnittsansicht eines elektromagnetisch betätigten Ventils mit einem elektromagnetischen Ventilaktuator nach einer ersten Ausführungsform in einer geschlossenen Stellung,
- Fig. 2: eine Querschnittsansicht des Ventils aus Fig. 1 in einer Übergangsstellung zu einer offenen Stellung,
- Fig. 3: eine Querschnittsansicht des Ventils aus Fig. 1 in einer offenen Stellung,
- Fig. 4: eine Prinzipskizze einer Hubkolbenbrennkraftmaschine nach einer ersten Ausführungsform,
- Fig. 5 bis 13: Detailquerschnittsansichten eines Einlasskanals einer Hubkolbenbrennkraftmaschine nach einer ersten bis neunten Ausführungsform, und
- Fig. 14: eine Prinzipskizze einer Hubkolbenbrennkraftmaschine nach einer zehnten Ausführungsform.
- Fig. 15: eine schematische Darstellung der Hubkolbenbrennkraftmaschinen- und Ventilsteuerung

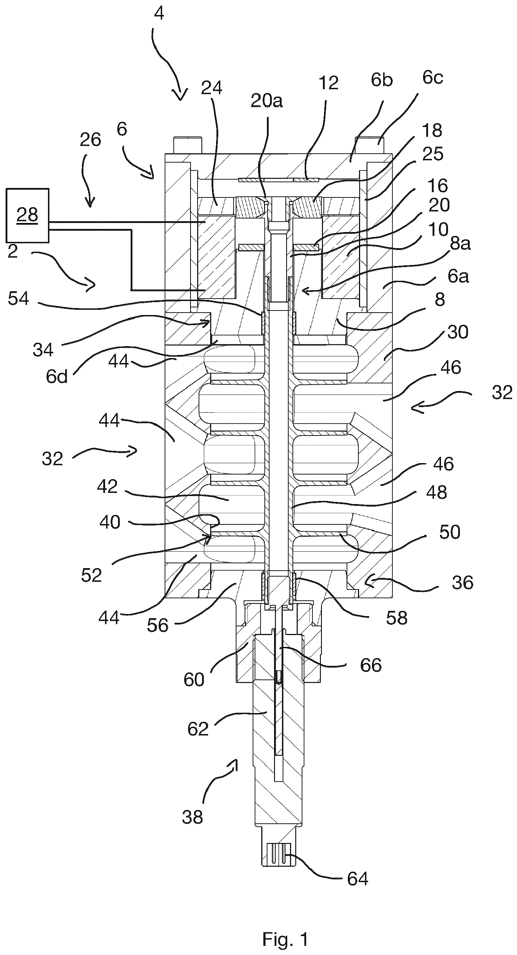

Fig. 1 zeigt ein zusammengebautes elektromagnetisch betätigtes Ventil 1 in einer ersten Ausführungsform. Das Ventil 2 weist auf einer Endseite (in Fig. 1 der oberen Endseite) einen elektromagnetischen Ventilaktuator (Aktuator) 4 auf. Der Ventilaktuator 4 weist ein Aktuatorgehäuse 6, das aus einem Seitenwandbauteil 6a und einem Gehäusedeckel 6b aus Eisen ausgebildet ist. Das Seitenwandbauteil 6a bildet die Seitenwände des Aktuatorgehäuses 6 und weist außenseitig eine Quaderform oder eine hohlzylindrische Form auf. Innenseitig ist das Seitenwandbauteil 6a hohlzylindrisch ausgebildet. Das Seitenwandbauteil 6a ist bevorzugt als Aluminium-Kühlmantel ausgebildet und dient zur Kühlung des Aktuators. Der Gehäusedeckel 6b sitzt auf dem oberen offenen Ende des Seitenwandbauteils 6a und verschließt den von dem Seitenwandbauteil 6a umgebenen Innenraum. Der Ventilaktuator 4 wird über Schraubbolzen 6c, die den Gehäusedeckel 6b mit dem Seitenwandbauteil 6a verspannen, an einem Fluidkanalgehäuse (später beschrieben) befestigt.

In dem Aktuatorgehäuse 6 ist ein Spulenträger 8 aus Eisen vorgesehen, an dem eine Magnetspule 10 gehalten wird. Der Spulenträger 8 ist als Hohlzylinder ausgebildet und weist an seinem in Fig. 1 unteren Endbereich auf seiner Außenseite einen nach außen vorstehenden Flansch auf. Die Magnetspule 10 ist bzw. sitzt oben auf dem Flansch und steht über den oberen Rand des Spulenträgers 8 vor. Der Spulenträger 8 erstreckt sich in der oben-unten Richtung innerhalb der Magnetspule 10 etwa bis zu deren Mitte. Die Magnetspule 10 ist so angeordnet, dass eine durch den Hohlzylinder verlaufende Mittelachse (Symmetrieachse) koaxial zu einer durch die Magnetspule 10 verlaufenden Mittelachse senkrecht zu deren Radialrichtung ist. Weiterhin ist die Unterseite des Flansches zum Einsetzen bzw. Positionieren in ein Fluidkanalgehäuse (später beschrieben) ausgebildet.

In dem Aktuatorgehäuse 6 ist oberhalb der Magnetspule 10 ein erster Permanentmagnet 12 vorgesehen. Der erste Permanentmagnet 12 haftet durch seine Magnetkraft an dem Gehäusedeckel 6b in einer für den ersten Permanentmagneten 12 vorgesehenen Vertiefung. Der erste Permanentmagnet 12 ist ringförmig ausgebildet und so angeordnet, dass eine durch den Ring verlaufende Ringachse koaxial zu einer durch die Magnetspule 10 verlaufenden Mittelachse ist.

An dem oberen Ende des Spulenträgers 8 haftet durch seine Magnetkraft ein zweiter Permanentmagnet 16 in einer entsprechenden Vertiefung. Der zweite Permanentmagnet 16 ist also in bzw. innerhalb der Magnetspule 10 angeordnet. Der zweite Permanentmagnet 16 ist ringförmig ausgebildet und so angeordnet, dass eine durch den Ring verlaufende Ringachse koaxial zu der durch die Magnetspule verlaufenden Mittelachse ist. Der Ringinnendurchmesser entspricht im Wesentlichen dem Innendurchmesser des zentralen Durchgangslochs durch den als Hohlzylinder ausgebildeten Spulenträger.

Weiterhin ist ein dritter Permanentmagnet 18 vorgesehen. Dieser ist entlang der durch die Magnetspule verlaufenden Mittelachse bewegbar zwischen dem ersten Permanentmagneten 12 und dem zweiten Permanentmagneten 16 angeordnet. Der dritte Permanentmagnet 18 ist ringförmig ausgebildet und so angeordnet, dass eine durch den Ring verlaufende Ringachse koaxial zu der durch die Magnetspule verlaufenden Mittelachse ist.

Der dritte Permanentmagnet 18 ist an einem oberen Ende eines hohlzylindrischen Verbindungsbauteils 20 befestigt. Die Befestigung erfolgt über ein in das obere Ende einschraubbares Spannbauteil 20a, das den dritten Permanentmagneten 18 an dem Verbindungsbauteil 20 anbringt. Das Verbindungsbauteil 20 erstreckt sich geradlinig und koaxial zu der durch die Magnetspule verlaufenden Mittelachse bis in das Durchgangsloch durch den Spulenträger 8. Der Außendurchmesser des Verbindungsbauteils 20 ist kleiner als der Innendurchmesser des Spulenträgers 8. Das untere Ende des Verbindungsbauteils 20 ist mit einem später beschriebenen Ventilkörper 22, der mittels dem Ventilaktuator 4 betätigbar ist, verbunden. Insbesondere weist das untere Ende des Verbindungsbauteils 20 ein Außengewinde auf, dass mit einem in dem Ventilkörper 22 vorgesehenen Innengewinde verschraubbar ist. Der dritte Permanentmagnet 18 wird über den Ventilkörper 22 in dem Aktuatorgehäuse 6 entlang einer mit der Mittelachse durch die Magnetspule übereinstimmenden Bewegungsachse bewegbar (in der oben-unten Richtung bewegbar) gelagert.

Weiterhin ist auf der Oberseite, d.h. der dem Spulenträger 8 abgewandten Seite der Magnetspule ein ferromagnetischer Kraftverstärkungsring 24 vorgesehen. Der Ringaußendurchmesser ist geringfügig größer als der Außendurchmesser der Magnetspule 10. Der Ringinnendurchmesser entspricht im Wesentlichen dem Innendurchmesser der Magnetspule 10. Der dritte Permanentmagnet 18 wird daher in seiner Bewegbarkeit durch den Kraftverstärkungsring 24 nicht eingeschränkt. Der Kraftverstärkungsring 24 ist außenumfangsseitig in einem aus Eisen ausgebildeten Mantel 25 gehalten (eingepresst). Durch den Kraftverstärkungsring 24 wird das Magnetfeld der Spule gebündelt. Durch den Mantel 25 wird das Feld weiter gebündelt.

Der Mantel 25 ist als Hohlzylinder ausgebildet und weist eine derartige Höhe auf, dass er sich von unterhalb der Magnetspule 10 bis oberhalb des ersten Permanentmagneten 12 erstreckt. Der Mantel 25 steht im Kontakt mit dem ihn umgebenden Seitenwandbauteil 6a, das ihn unmittelbar kühlt. Der Mantel 25 sitzt an seinem unteren Ende auf einem dafür vorgesehenen Flanschbereich des Spulenträgers 8 auf. Von oben her wird der Mantel 25 unmittelbar durch die Unterseite des Gehäusedeckels 6b kontaktiert.

Die von den Permanentmagneten ausgebildeten und überlagerten Magnetfelder (im stromlosen Zustand) und, im bestromten Zustand zusätzlich das von der Magnetspule erzeugte Feld, werden maßgeblich durch die Eisenbauteile, wie der Kraftverstärkungsring 24 und der Mantel 25 beeinflusst. Hierdurch lassen sich eine Gleichgewichtsposition im stromlosen Zustand als auch im bestromten Zustand einstellen. Magnetisch wirksame Bauteile im Aktuator 4 sind der Spulenträger 8, die Magnetspule 10, der Mantel 25, der Kraftverstärkungsring 24, der Gehäusedeckel 6b, die drei Permanentmagneten 12, 16 und 18. Zudem sind ggfs., je nach Material das Verbindungsbauteil 20, das Spannbauteil 20a und der Ventilkörper 22 bei der Auslegung zu berücksichtigen. Durch die unmittelbare Kontaktierung der aus Eisen ausgebildeten Bauteile Spulenträger 8, Mantel 25 und Gehäusedeckel 6b kann ein verlustarmer magnetischer Kreis ausgebildet werden.

Die schematisch dargestellte Magnetspule 10 ist in dieser Ausführungsform als Luftspule ausgeführt und ist nicht auf einem Wickelkörper gewickelt. Sie sitzt auf dem Spulenträger 8 und unter leichter Vorspannung in dem Mantel 25 damit sie sich nicht im System bewegen kann. Die Drahtenden sind über elektrische Leitungen 26 mit einem Aktuatorsteuergerät 28, welches eine steuerbare Spannungs- bzw. Stromversorgung bildet, verbunden, so dass die Magnetspule 10 mit Spannung und Strom versorgt werden kann.

Der erste und zweite Permanentmagnet 12, 16 ist jeweils so ausgebildet und angeordnet, dass die jeweilige Polachse im Wesentlichen auf der Bewegungsachse des dritten Permanentmagneten liegt. Die Polaritäten des ersten und zweiten Permanentmagneten 12, 16 sind gleichgerichtet. Beispielsweise ist jeweils oben der Nordpol und unten der Südpol.

Der dritte Permanentmagnet 18 ist so ausgebildet und angeordnet, dass die Polachse im Wesentlichen auf der Bewegungsachse des dritten Permanentmagneten 18 liegt. Die Polarität des dritten Permanentmagneten 18 ist entgegengesetzt zu denen des ersten oder zweiten Permanentmagneten 12, 16. Im vorliegenden Beispiel ist somit oben der Südpol und unten der Nordpol.

Die drei Permanentmagnete 12, 16, 18 sind so ausgebildet, dass der dritte Permanentmagnet 18 bei stromloser Magnetspule 10 aufgrund der Abstoßung zu dem ersten und zweiten Permanentmagneten 12, 16 zwischen diesen in einer Gleichgewichtslage gehalten wird. Es versteht sich von selbst, dass die Position aufgrund der ebenfalls wirkenden Gravitationskraft von der Raumorientierung des Aktuators abhängt.

Mit der Magnetspule 10 kann bei Anlegen einer elektrischen Spannung mittels des Aktuatorsteuergeräts 28 ein weiteres Magnetfeld erzeugt werden, welches die Magnetfelder der drei Permanentmagneten überlagert. Hierdurch werden die auf den dritten Permanentmagneten 18 wirkenden Kräfte verändert, so dass der dritte Permanentmagneten 18 in eine neue, zu der ersten verschiedenen Gleichgewichtslage bewegt wird.

Durch den Kraftverstärkungsring kann der Magnetkreis signifikant beeinflusst werden. Die Dicke des scheibenförmigen Ringes, sowie der Innendurchmesser haben entscheidenden Einfluss auf den Kraftverlauf über den Ventilhub, sowie die sichere Realisierung der vorbestimmten Position im spannungslosen Zustand.

Weiter ist ein Fluidkanalgehäuse 30 vorgesehen, in welchem ein Fluidkanal 32 ausgebildet ist, der mittels des Ventilkörpers 22 versperrbar ist. Auf einer oberen Endseite des Fluidkanalgehäuses 30 ist eine Aktuatoröffnung 34 vorgesehen, in die im montierten Zustand des Aktuators ein nach unten vorstehender Flanschbereich des Spulenträgers 8 eingesetzt ist. Auf einer unteren Endseite des Fluidkanalgehäuses 30 ist eine Sensoröffnung 36 vorgesehen, in die ein unten beschriebenes Positionsbestimmungsmittel 38 eingesetzt ist.

Zwischen den Endseiten sind in der oben-unten Richtung vier mit Abstand hintereinander angeordnete Innenumfangsdichtbereiche 40 vorgesehen. Die Innenumfangsdichtbereiche 40 sind jeweils als ringförmige Innenumfangsfläche ausgebildet, die sich um die Bewegungsachse als Mittellinie und mit einer vorbestimmten Dicke in einer Richtung parallel zu der Bewegungsachse erstreckt.

Oberhalb und unterhalb jedes Innenumfangsdichtbereichs 40 ist jeweils ein Erweiterungsbereich 42 ausgebildet. Von benachbarten Erweiterungsbereichen 42 begrenzte Innenräume in dem Fluidkanalgehäuse 30 sind also über einen Innenraum miteinander verbunden, der von dem zwischen ihnen liegenden Innenumfangsdichtbereich 40 begrenzt wird. Jeder Erweiterungsbereich 42 weist einen größeren Querschnitt senkrecht zu der Bewegungsachse auf, als der von den Innenumfangsdichtbereichen 40 definierte Querschnitt. Insbesondere erweitert sich der Querschnitt strömungstechnisch optimiert ausgehend von dem jeweiligen oberen oder unteren Rand eines Innenumfangsdichtbereichs 40 gerundet bis zu einem maximal Innendurchmesser um sich dann wieder gerundet bis zu dem benachbarten Innenumfangsdichtbereich 40 oder der oberen oder unteren Endwand im Fluidkanalgehäuse 30 zu verkleinern.

Jeder Erweiterungsbereich 42 weist zudem entweder einen seitlichen Einlass 44 in einer ersten Richtung senkrecht zu der Bewegungsachse oder einen seitlichen Auslass 46 in einer der ersten Richtung entgegengesetzten Richtung auf. Auf der jeweils anderen Seite laufen die Wände der Erweiterungsbereiche 42 auf der dem Innenraum abgewandten Seite spitz zu, so dass sich die Einlässe 44 bzw. Auslässe 46 in Richtung aus dem Fluidkanalgehäuse 30 heraus erweitern.

In das Fluidkanalgehäuse 30 ist weiterhin der Ventilkörper 22 eingesetzt. Der Ventilkörper 22 weist einen sich entlang der Bewegungsachse erstreckenden hohlen Ventilschaft 48 auf. An dem Ventilschaft 48 sind Dichtteller 50 vorgesehen, die sich senkrecht zu dem Ventilschaft 48 erstrecken. Die Außenumfangsfläche jedes Dichttellers dient als Außenumfangsdichtbereich 52, der zur Abdichtung gegenüber dem Innenumfangsdichtbereich 40 geeignet ist. Die Dichtteller 50 sind dabei so ausgebildet und angeordnet, dass bei entsprechender Positionierung des Ventilkörpers jeder Innenumfangsdichtbereich 40 in Berührung/Abdichtung mit einem Außenumfangsdichtbereich 52 kommt. Das obere Ende des Ventilschafts 48 ist, wie oben angegeben, mit dem Verbindungsbauteil 20 des Aktuators 4 verbunden (hier verschraubt).

Die radiale Lagerung (senkrecht zu der Bewegungsachse) des Ventilschafts 48 erfolgt an seinem oberen Ende einerseits durch ein erstes Gleitlager 54, das in einem unteren Endbereich Durchgangslochs 8a des Spulenträgers 8 vorgesehen ist. Zur Sicherung des Lagers 54 ist eine Sicherungsplatte 6d vorgesehen. Andererseits ist gegenüberliegend zu dem Spulenträger 8 ein Sensorträger 56 mit einem zentralen Durchgangsloch in die Sensoröffnung 36 eingesetzt. In dem zentralen Durchgangsloch ist wiederum ein zweites Gleitlager 58 vorgesehen, dass zur radialen Lagerung des unteren Endbereichs des Ventilschafts 48 dient.

Zur Bestimmung der tatsächlichen bzw. aktuellen Position des Ventilkörpers 22 bezüglich des Fluidkanalgehäuses 30 ist auf der unteren Seite des Fluidkanalgehäuses 30 das Positionsbestimmungsmittel 38 vorgesehen. Das Positionsbestimmungsmittel 38 wird über den in die Sensoröffnung 36 eingesetzten Sensorträger 56 an dem Fluidkanalgehäuse 30 befestigt (beispielsweise eingepresst). Auf der dem Fluidkanalgehäuse 30 abgewandten Seite weist der Sensorträger 56 ein Innengewinde auf, in das ein hohlzylindrisches Distanzbauteil 60 eingeschraubt ist. Das Distanzbauteil 60 weist auf der dem Sensorträger 56 abgewandten Seite einen Innengewinde auf, in das ein Sensorspulenträger 62 mit außenliegendem Messanschluss 64 eingeschraubt ist. Weiterhin ist ein rohrförmiger Sensorkern 66 in ein unteres Ende des Ventilschafts 48 eingeschraubt. Der Sensorkern 66 steht bis in dem Sensorspulenträger 62 vorhandenes Sackloch vor. In der Ausführungsform ist der Sensorkern zweiteilig ausgebildet. Das Positionsbestimmungsmittel 38 ist hier also als herkömmlicher LVDT-Sensor ausgebildet.

Fig. 1 zeigt das Ventil 2 in der geschlossenen Stellung. D.h., die Außenumfangsdichtbereiche 52 sind, in radialer Richtung betrachtet, in Überlappung (hier nur teilweise) mit den Innenumfangsdichtbereichen 40, wodurch ein Fluidstrom von Innenraum eines Erweiterungsbereichs 42 in den Innenraum eines benachbarten Erweiterungsbereichs 42 über den von dem dazwischenliegenden Innenumfangsdichtbereich 40 umgebenen Innenraum nicht möglich ist. Stattdessen bilden in dieser Stellung die Wände der Erweiterungsbereiche 42 und die Dichtteller 50 eine durchgehende Wand aus, die im Querschnitt (durch eine Ebene, in der die Bewegungsachse liegt und in der Einlas 44 und Auslass 46 im Wesentlichen hälftig geschnitten ist (wie in Fig. 1 dargestellt)) einer Rechteckwelle ähnelt.

Das Ventil 2 ist, insbesondere da die Erweiterungsbereiche 42 abwechselnd zur Einlassseite oder zur Auslassseite geöffnet sind, so ausgebildet, dass ein mit Druck beaufschlagtes Fluid ausgehend von der Einlassseite auf den in der geschlossenen Stellung befindlichen Ventilkörper 22 keine Kraft in Richtung der Bewegungsachse des Ventilkörpers 22 aufbringen kann. Es wird zwar auf jeden Dichtteller 50 eine Kraft aufgebracht, die auf den Ventilkörper 22 wirkende Gesamtkraft hebt sich jedoch auf.

Weiterhin ist das Ventil so ausgebildet, dass der Ventilkörper 22 in dieser in Fig. 1 gezeigten geschlossenen Stellung alleine durch die zwischen den Permanentmagneten 12, 16, 18 wirkenden Magnetkräfte gehalten wird. An der Magnetspule 10 ist in dieser Stellung keine Spannung angelegt. Weiterhin ist kein mechanischer Anschlag vorgesehen.

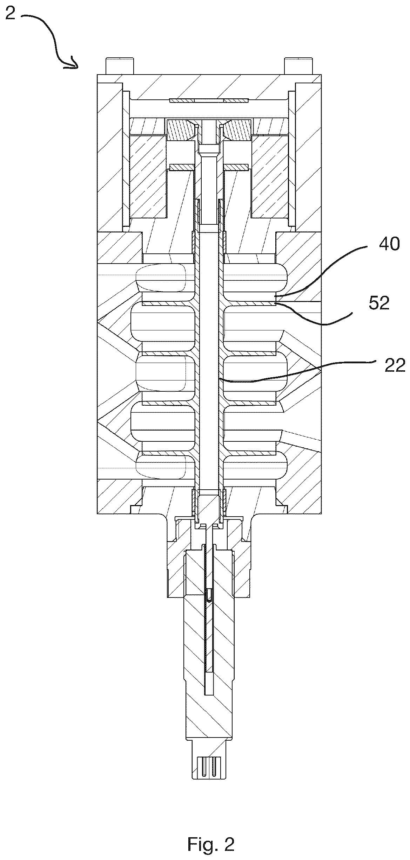

Fig. 2 zeigt das Ventil 2 aus Fig. 1 in einer Übergangsstellung, in der der Ventilkörper 22 ausgehend von der Position in Fig. 1 geringfügig durch die Magnetspule 10 (durch Anlegen einer Spannung) unten bewegt wurde, so dass die oberen Ränder der Innenumfangsdichtbereich 40 an den unteren Rändern der Außenumfangsdichtbereiche 52 gerade noch Anliegen (Cutting Edge Position). Eine radiale Überlappung von Innenumfangsdichtbereichen 40 und Außenumfangsdichtbereichen 52 liegt gerade nicht mehr vor, allerdings stehen die Ränder noch aneinander an, so dass das Ventil noch dichtet. Eine solche Position wird hier immer noch als eine geschlossene Stellung bezeichnet.

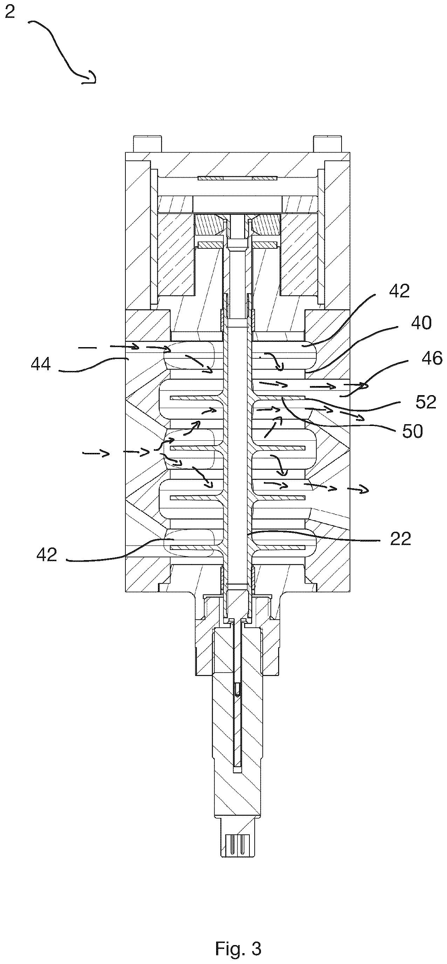

Fig. 3 zeigt das Ventil 2 aus Fig. 1 in einer Stellung, in der der Ventilkörper 22 gegenüber der in Fig. 2 gezeigten Stellung durch die Magnetspule 10 noch weiter nach unten in eine maximal geöffnete Stellung verstellt ist. Die Außenumfangsdichtbereiche 40 sind hier in Richtung der Bewegungsachse nach unten beabstandet zu den Innenumfangsdichtbereichen 40. Bevorzugt stehen die Dichtteller 50 mit Ausnahme des untersten Dichttellers 50 in dieser Stellung jeweils mittig zwischen zwei benachbarten Innenumfangsdichtbereichen 40. Hierdurch werden in dem Fluidkanalgehäuse 30 mehrere Fluidkanäle 32 freigegeben, die jeweils ausgehend von einem Einlass 44 in den Innenraum in dem Erweiterungsbereich 42 über einen Innenraum in dem Innenumfangsdichtbereich 40 zu einem Auslass im benachbarten Erweiterungsbereich 42 führen, wie durch Pfeile in Fig. 3 angedeutet. Aufgrund der abwechselnden Öffnung benachbarter Erweiterungsbereiche 42 in entweder einen Einlass 44 oder einen Auslass 46 wird ein Fluidstrom, der in den nicht-randseitigen (mittleren) Erweiterungsbereich 42, der zum Einlass geöffnet ist, einströmt, in zwei Teilströme aufgespalten. Ein oberer Teilstrom verläuft dann zu dem nach oben benachbarten Erweiterungsbereich 42 mit Auslass und ein unterer Teilstrom verläuft zu dem nach unten benachbarten Erweiterungsbereich 42 mit Auslass 46. Umgekehrt strömt in diesen oberen Erweiterungsbereich 42 mit Auslass 46 gleichzeitig ein Fluidstrom aus dem obersten Erweiterungsbereich 42, der zum Einlass 44 geöffnet ist. Entsprechend verlaufen auch die Fluidströme durch die beiden unteren Erweiterungsbereiche 42.

In dieser offenen Stellung wird der Ventilkörper 22 alleine durch die zwischen den Permanentmagneten 12, 16, 18 und der Magnetspule 10 durch Aufbringen einer Spannung wirkenden Kräfte gehalten, es ist also kein mechanischer Anschlag vorgesehen.

Das Ventil 2 ist insgesamt so ausgebildet, dass in der Bewegung von der geschlossenen Stellung in die geöffnete Stellung und zurück der Ventilkörper 22 alleine durch die zwischen den Permanentmagneten 12, 16, 18 und ggfs. der Magnetspule 10 wirkenden Magnetkräfte gehalten wird. Die Bewegung erfolgt, ohne dass der Ventilkörper 22 oder mit ihm verbundene Teile wie das Verbindungsbauteil 20 oder der dritte Permanentmagnet 18 oder weitere Bauteile einen Anschlag kontaktieren. Dies wird dadurch erreicht, dass unter anderem die Einbaulage, das Gewicht des Ventilkörpers 22, des Verbindungsbauteils 20, des dritten Permanentmagneten 18 und weiterer bewegter Bauteile, die Reibung in der Lagerung des Ventilkörpers 22 und zwischen den Dichttellern 50 und den Innenumfangsdichtbereichen 40 in der Auslegung der Permanentmagneten 12, 16, 18 und des mittels der Magnetspule 10 erzeugbaren Feldes berücksichtigt wird. Je nach Stärke der Permanentmagneten kann ggfs. das Gewicht und/oder Reibung vernachlässigt werden. Des Weiteren sind der Verstärkungsring und der Einfluss weiterer ferromagnetischer Bauteile, ggfs. Temperatur, Druck etc. zu berücksichtigen. Die Auslegung der einzelnen Komponenten erfolgt bevorzugt durch Simulation und/oder Versuche.

Weiterhin ist das Ventil 2 so ausgebildet, dass auch bei einem Überschwingen bzw. Überfahren der maximal offenen Stellung in bzw. nach der Bewegung von der geschlossenen Stellung hin zu der maximal offenen Stellung kein Kontakt an einen mechanischen Anschlag erfolgt. Vielmehr Erzeugen die Permanentmagneten eine Rückstellkraft in die in Richtung der maximal offenen Stellung, so dass der Ventilkörper 22 in diese zurückschwingt. Gleiches gilt für die Bewegung von der offenen Stellung in die geschlossene Stellung. Diesbezüglich ist zu beachten, dass die Kraft, die zwischen den Permanentmagneten wirkt, umgekehrt exponentiell zu dem Abstand zwischen denselben verläuft. D.h., zwischen den sich abstoßenden Permanentmagneten steigt die Kraft, die einer Annäherung entgegenwirkt, exponentiell an während die, die ausgehend von dem anderen Permanentmagneten für eine Abstandsvergrößerung wirkt, exponentiell abnimmt.

Wie oben angegeben ist das Ventil 2 in dieser Ausführungsform so ausgebildet, dass der Ventilkörper 22 in dem Zustand, in dem keine Spannung an der Magnetspule 10 angelegt ist, sich in die in Fig. 1 gezeigte geschlossene Ventilposition bewegt oder dort gehalten wird. Hierdurch wird eine sogenannte Fail-Safe-Funktion realisiert, die sicherstellt, dass das Ventil 2 bei Ausfall der Steuerung in die geschlossene Position gebracht wird.

Soll alternativ beispielsweise eine sogenannte Limp-Home-Funktion vorgesehen sein, ist das Ventil so ausgebildet, dass der der Ventilkörper 22 in dem Zustand, in dem keine Spannung an der Magnetspule angelegt ist, sich in eine gerade noch geöffnete Position (Position, in der das Ventil mit einem bestimmten Öffnungsgrad (beispielsweise 1% oder 10%) geöffnet ist) bewegt oder dort gehalten wird. Diese befindet sich zwischen der in Fig. 3 und der in Fig. 2 gezeigten Stellung. In diesem Fall wird die geschlossene Stellung oder eine weiter geschlossene durch Anlegen einer ersten Spannung an der Magnetspule (bevorzugt basierend auf der Positionserfassung) und eine weiter geöffnete offene Position oder die maximal geöffnete Position durch Anlegen einer zu der ersten Spannung entgegengesetzt polarisierten Spannung realisiert.

Im realen Betrieb können über die Laufzeit der Ventile ebenfalls durch individuelle Unterschiede bei den Ventilen (Verschmutzung, Lagerverschleiß, oder ähnliches) durchaus kleine Abweichungen in der geschlossenen Position entstehen, die aber vorteilhafterweise durch die Positionserfassung und entsprechende Bestromung korrigiert werden können).

Das Ventil 2 ist so ausgebildet, dass eine Bewegung von der offenen Stellung in die geschlossene Stellung einen Ventilhub von maximal 10 mm entspricht und innerhalb von 10 Millisekunden erfolgen kann. Hierfür sind die Stellkraft erzeugenden Bauteile wie Permanentmagneten, Verstärkungsring und Spule etc. gegenüber den zu bewegenden Massen (dritter Permanentmagnet, Ventilkörper und zugehörige Verbindungsbauteile für den dritten Permanentmagneten und die beweglichen Teil der Positionsbestimmungsmittel) entsprechend einem erforderlichen Kraft/Weg-Verlauf in Abhängigkeit der Orientierung/Positionierung des Aktuators auszulegen. Magnetisches Material, Spulenentwurf, zulässiger Spulenstrom, ventilgeometrische Randbedingungen, sowie Bauraumvorgaben ergeben nach Optimierungsrechnungen und Simulationen letztendlich die erforderlichen Permanentmagnetdimensionen und Spulendimensionierung. Zur Anwendung können auch sogenannte Flowuntersuchungen kommen. Die Auslegung insbesondere des ersten und zweiten Permanentmagneten hat insbesondere Einfluss auf den in der Spule notwenigen Haltestrom bzw. die Haltespannung, auf eine Beschleunigung- und Bremsunterstützung des Ventilkörpers in seinen Bewegungen, auf die Realisierung einer Fail-Safe-Situation zum Motorschutz bei Ausfall der Energieversorgung, auf die Realisierung einer Limp-Home-Situation mit vorbestimmbarer maximalen Drehmomentabgabe des Motors.

Die erforderlichen Magnetkräfte, bei Einhaltung der geometrischen Randbedingungen und der Bauteilmassen der zu beschleunigenden Bauteile, können beispielsweise durch Neodynium-Magneten erzielt werden. Zur Vermeidung von Korrosion und aufgrund der spröden Materialbeschaffenheit der Neodynium-Magnete, werden diese durch eine geeignete Beschichtung, vorzugsweise eine NiCuNi Beschichtung geschützt. Die Komposition des Neodynium-Magneten wird weiterhin derart gestaltet werden, dass die magnetischen Eigenschaften in einem weiten Temperaturbereich von -40 Grad Celsius bis mindestens 125 Grad Celsius erhalten bleiben. Bewährt haben sich hier ausschließlich jene Neodynium-Qualitäten, die eine Zulassung zwischen 150 Grad Celsius und 200 Grad Celsius als maximale Betriebstemperatur gewährleisten.

Es versteht sich von selbst, dass die oben gemachten Angaben zu "oben" und "unten" sich lediglich auf die in die Fig. 1 bis 3 dargestellten Orientierungen auf dem Zeichnungsblatt beziehen und nicht eine notwendige Raumorientierung bezogen auf Gravitationskraft oder Ähnliches bedeuten. Das Ventil kann beliebig im Raum angeordnet werden.

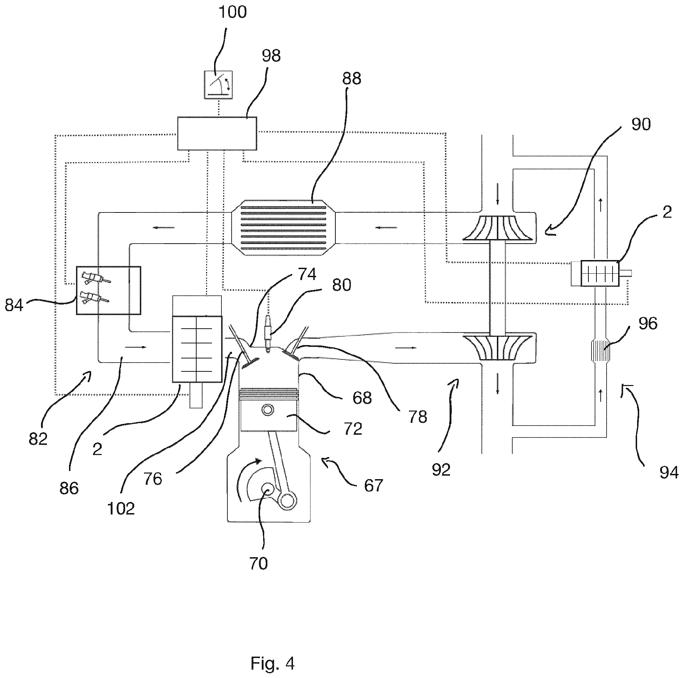

Bezugnehmend auf Fig. 4 wird eine vorteilhafte Hubkolbenbrennkraftmaschine gemäß der vorliegenden Offenbarung beschrieben, die wie folgt aufgebaut ist: wie bei einer herkömmlichen Hubkolbenbrennkraftmaschine wird in einem Motorgehäuse (Motorblock/Zylinderkopf) 67 innerhalb eines Zylinders 68 ein Hohlraum (Zylinderinnenraum) ausgebildet, in dem ein mit einer Kurbelwelle 70 verbundener Kolben 72 hin und her bewegbar ist. Auf der der Kurbelwelle 70 abgewandten Seite wird durch den Kolben 72 und die Wände des Zylinders 68 ein Brennraum begrenzt, in dem unter Verbrennung von Kraftstoff ein Gas expandiert wird, wodurch der Kolben 72 unter Verrichtung von Arbeit nach unten bewegt werden kann.

In der Wand des Brennraums, bevorzugt in einer Zylinderkopfwand ist ein Einlassventil 76 und ein Auslassventil 78 vorgesehen. Die Ventile 76, 78 werden beispielsweise über einen nicht gezeigten Ventiltrieb entsprechend der Drehung der Kurbelwelle 70 geöffnet und geschlossen. Weiterhin ist eine Zündkerze 80 und eine in einem Ansaugkanal 82 vorgesehene Einspritzanlage 84 zum Einleiten von Kraftstoff (gasförmig oder flüssig) vorgesehen. Mit der Einspritzanlage 84 kann ein Luft-Kraftstoffgemisch erzeugt werden, dass nach Einlass in den Brennraum durch die Zündkerze gezündet werden kann. Die so ausgebildete Hubkolbenbrennkraftmaschine arbeitet bevorzugt nach dem Ottoprinzip. Bevorzugt kommt als Kraftstoff Gas zum Einsatz.

Weiterhin ist in dem Ansaugkanalabschnitt 86, der zwischen der Einspritzanlage 84 und dem Einlassventil 76 ausgebildet ist, das oben beschriebene Ventil 2 als Ladungssteuerungsventil vorgesehen. Dieses Ventil 2 ersetzt eine Drosselklappe.

Weiterhin ist in dem Ansaugkanal 82 beispielhaft oberhalb der Einspritzanlage 84 ein Ladeluftkühler 88, ein Abgasturbolader 90 und gegebenenfalls ein nicht gezeigter Luftfilter vorgesehen. Entsprechend verläuft ein Abgaskanal 92 über den Abgasturbolader 90.

Weiterhin ist hier beispielhaft eine Abgasrückführungsvorrichtung (AGR-Vorrichtung) 94 vorgesehen, mit der über einen Abgasrückführungskühler 96 Abgas stromabwärts des Turboladers 90 zurück in den Ansaugkanal 82 stromaufwärts des Turboladers 90 zurückgeführt wird. Zur Regelung der AGR-Vorrichtung ist ein weiteres wie oben beschriebenes Ventil 2 als Abgasrückführungsventil vorgesehen.

Die Steuerung der Komponenten, insbesondere der zwei Ventile 2 erfolgt mittels eines Motorsteuergeräts 98, beispielsweise in Abhängigkeit eines Leistungsanforderungsglieds (Gaspedal) 100. Das bzw. die hier nicht gezeigten Aktuatorsteuergeräte 28 zur Ansteuerung des Aktuators des jeweiligen Ventils 2 ist integral in dem Motorsteuergerät 98 oder separat dazu zwischen Motorsteuergerät 98 und Aktuator vorgesehen. Das Motorsteuergerät 98 und das Aktuatorsteuergerät 28 werden gemeinsam oder einzeln auch als Steuergerät bezeichnet.

Im Betrieb der Hubkolbenbrennkraftmaschine kann das Ladungssteuerungsventil 2 in bestimmten Betriebszuständen derart gesteuert werden, dass der Schließzeitpunkt des Ventils bei abnehmender Leistungsanforderung zunehmend vor dem Schließzeitpunkt des Einlassventils liegt. Eine solche Steuerung und deren Vorteile sind bereits in der WO 00/03131 A1 beschrieben. Bevorzugt ist die Steuerung derart, dass das elektromagnetisch betätigte Ventil 2 bei noch geschlossenem Einlassventil öffnet, derart, dass eine sich in Folge eines zwischen dem elektromagnetisch betätigten Ventil 2 und dem Einlassventil 76 im Ansaugkanal 86 vorhandenen Unterdrucks ausbildende Druckwelle nach Reflexion am offenen Ansaugrohrende das Einlassventil 76 zu einem Zeitpunkt erreicht, zu dem dieses gerade öffnet, so dass die vom Kolben 72 zu leistende Ansaugarbeit vermindert wird.

Das Ausbilden der Hubkolbenbrennkraftmaschine, die nach diesem Prinzip arbeitet, mit dem vorliegenden Ventil hat sich als besonders vorteilhaft herausgestellt, da das Ventil 2 mittels des Motorsteuergeräts 98 und Aktuatorsteuergeräts 28 sehr genau und schnell geschaltet werden kann und zudem im Wesentlichen mangels Anschlags verschleißfrei arbeitet.

Weiterhin hat sich die Verwendung des Ventils 2 als AGR-Ventil als besonders vorteilhaft herausgestellt, da das Ventil aufgrund der Konstruktion zum einen verschleißfrei arbeitet und zum anderen nicht anfällig für Verstopfungen durch Abgaspartikel ist.

Es ist zu beachten, dass die Verwendung als AGR-Ventil vollkommen unabhängig von der Verwendung als Ansaugkanalventil ist und demnach eines der beiden Ventile weggelassen werden kann.

Gleiche Bezugszeichen bezeichnen zumindest Funktional gleichwirkende Bauteile, soweit nicht anders beschrieben. Es sind nicht in allen Figuren alle Bezugszeichen enthalten, sondern jeweils nur relevante Teile mit Bezugszeichen bezeichnet. Soweit nicht anders beschrieben gilt auch die Beschreibung einzelner Bauteile für alle Ausführungsformen. Des Weiteren können einzelne Merkmale einzelner Ausführungsformen miteinander kombiniert oder weggelassen werden.

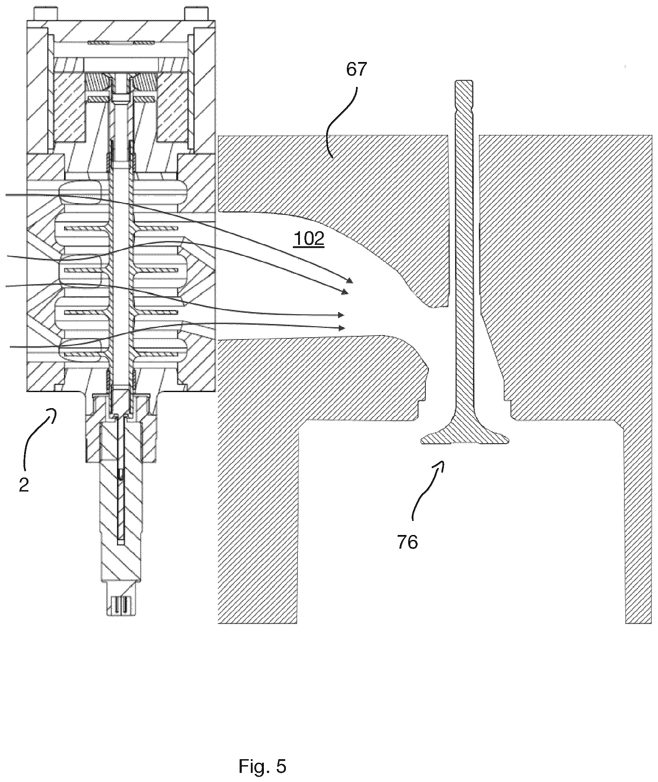

Fig. 5 zeigt beispielhaft einen Ausschnitt einer schematischen Querschnittsansicht der Hubkolbenbrennkraftmaschine mit dem an dem Motorgehäuse 67 angeflanschten Ventil 2. Insbesondere ist auch ein Ansaugkanalabschnitt 102 zwischen dem Ventil 2 (Ladungssteuerungsventil) und dem Einlassventil 76 gezeigt.

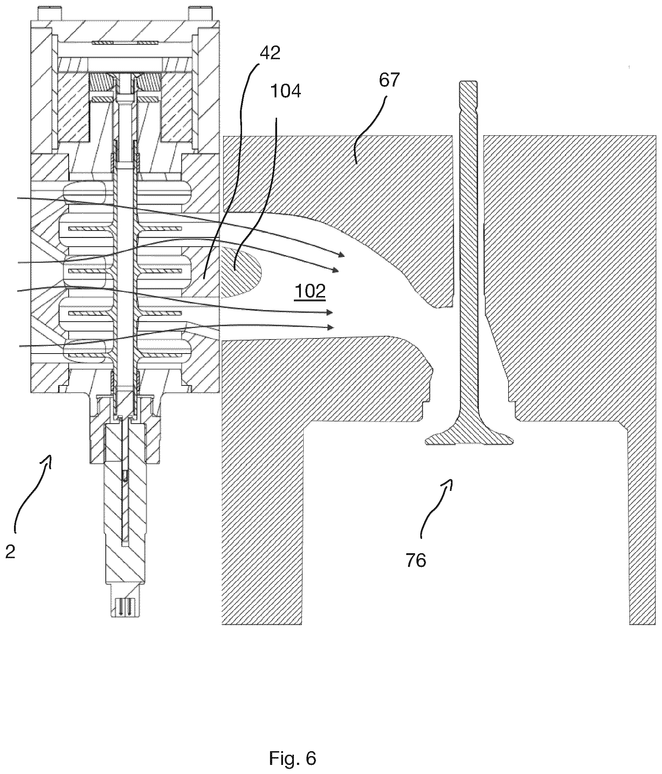

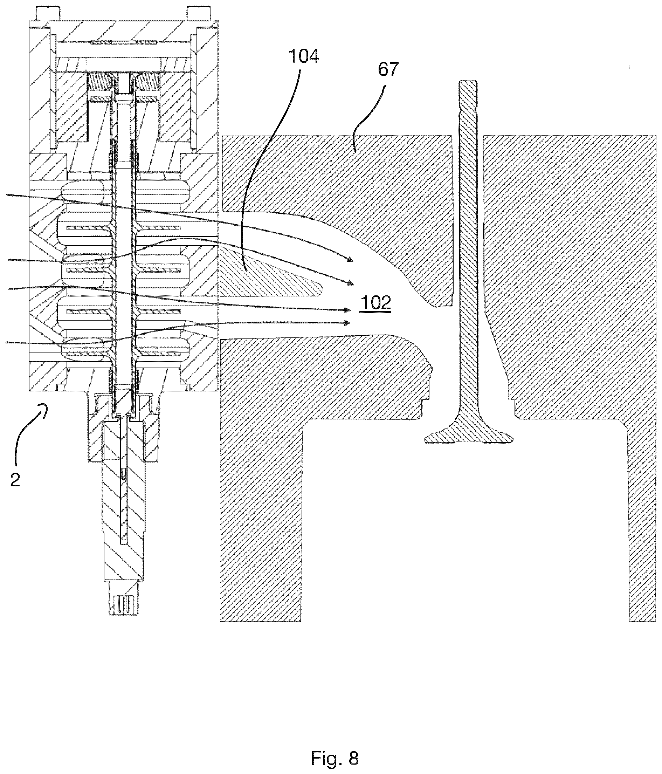

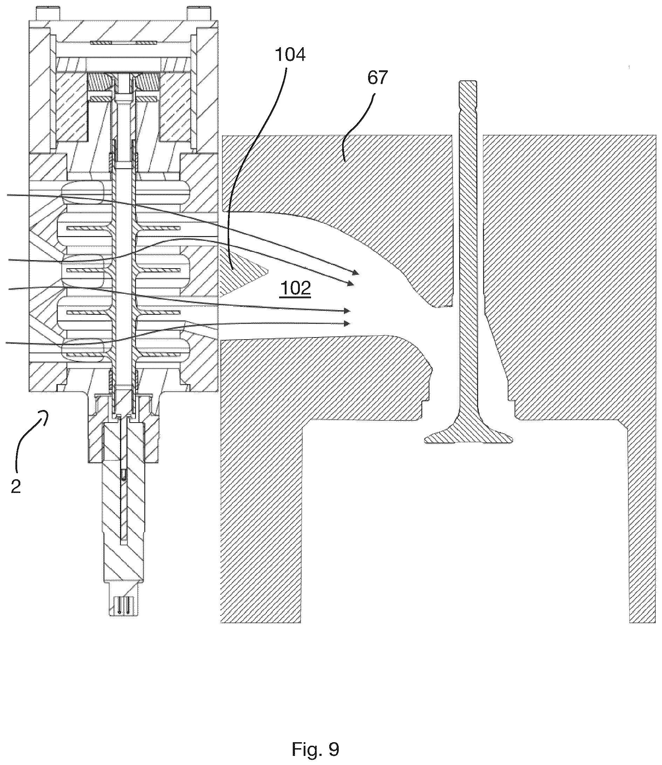

Bezugnehmend auf die Figuren 6 bis 9 werden ein dem in Fig. 5 dargestellten Detailquerschnitt entsprechende Detailquerschnitte weiterer vorteilhafter Hubkolbenbrennkraftmaschinen gemäß einem weiteren Aspekt der vorliegenden Offenbarung beschrieben, die nach dem gleichen Prinzip wie die bezüglich Fig. 4 beschriebene Hubkolbenbrennkraftmaschine arbeiten und ausgebildet sind, wobei alternativ zu dem Ventil 2 als Ladungssteuerungsventil und/oder AGR-Ventil auch herkömmliche Ventile verwendet werden können.

Bei Hubkolbenbrennkraftmaschinen gemäß diesem Aspekt wird das Volumen des Ansaugkanalabschnitts 102 zwischen dem Ladungssteuerungsventil 2 und dem Einlassventil 76 (berechnet bei geschlossenen Ventilen jeweils zwischen den Ventilkörpern) gegenüber der in Fig. 5 gezeigten Ausführungsform verringert, insbesondere auf unter 40% des Hubvolumens des Kolbens. Es hat sich herausgestellt, dass hierdurch eine weitere Effizienzsteigerung erreicht wird.

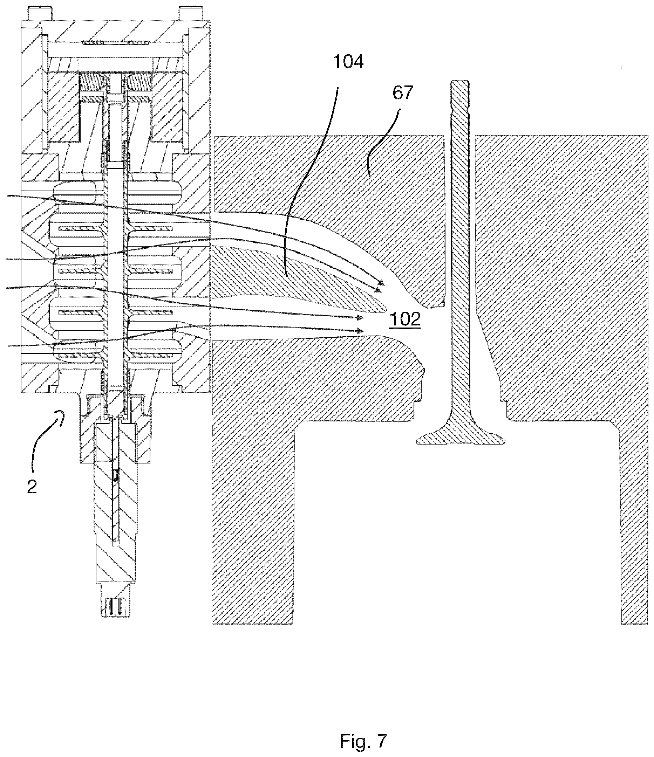

Die Verringerung des Volumens wird beispielsweise wie folgt erreicht: das Ventil 2 ist an dem Motorgehäuse 67 so angebracht, dass der Ventilauslass in einen im Motorgehäuse 67 ausgebildeten Einlasskanal bzw. Ansaugkanal mündet. Der mittlere Erweiterungsbereich 42 weist einen entsprechend erweiterten Strömungskeil 104 auf (Fig. 6), der bezogen auf den Wandbereich, der als Flansch zur Anlage an das Motorgehäuse ausgebildet ist, in den im Motorgehäuse 67 ausgebildeten Ansaugkanalabschnitt hineinragt und dadurch das Volumen des gesamten Ansaugkanalabschnitts 102 gegenüber der Anordnung in Fig. 5 verringert. Durch das Vorsehen des Strömungskeils 104 am Fluidkanalgehäuse 30 wird erreicht, dass das Ventil 2 ohne weitere Anpassung eines schon vorhandenen Ansaugkanals im Motorgehäuse 67 verwendet werden kann. Fig. 7, 8 und 9 zeigen beispielhaft erweiterte Strömungskeile 104. Die Form der Keile kann an die Form des schon vorhandenen Ansaugkanals angepasst werden. Der Strömungskeil kann bevorzugt integral mit oder nachträglich montiert an dem Ventilgehäuse ausgebildet sein. Zusätzlich oder alternativ kann ein Zwischenbauteil zwischen Ventil und Motorgehäuse vorgesehen sein, über das das Ventil mit dem Motorgehäuse verbunden wird. Der Strömungskeil ragt dann ausgehend von dem Ventil durch das Zwischenbauteil in den Ansaugkanalabschnitt hinein. Alternativ ist der Strömungskeil in dem Zwischenbauteil ausgebildet und ragt ausgehend von dort in den Ansaugkanalabschnitt.

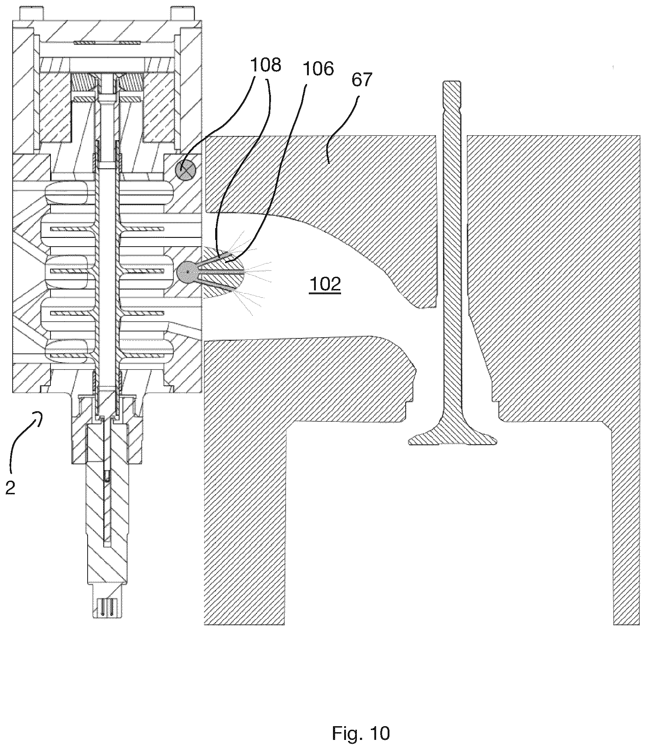

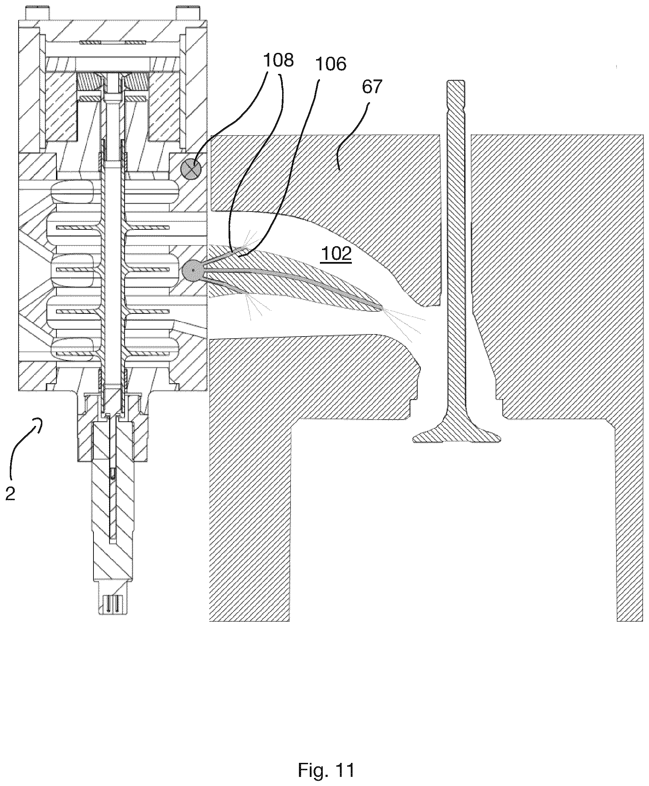

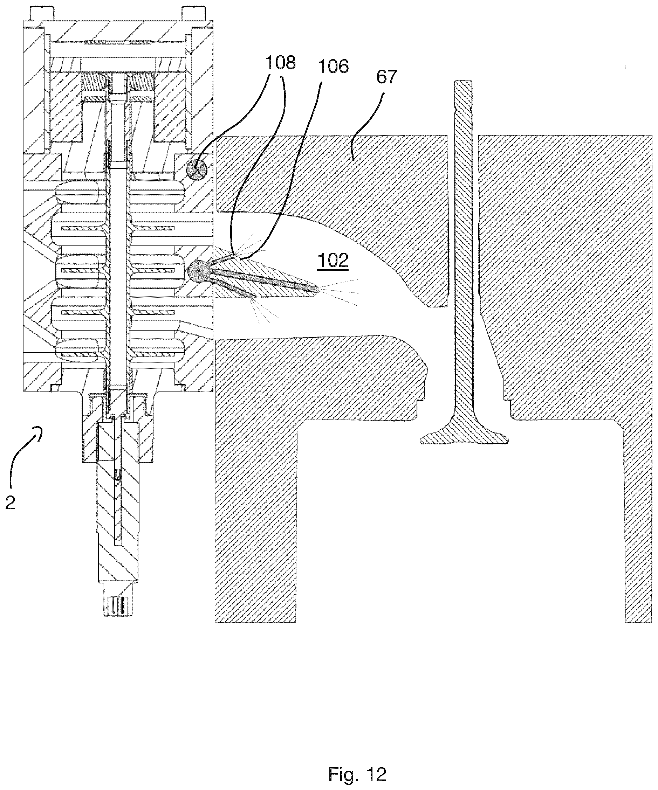

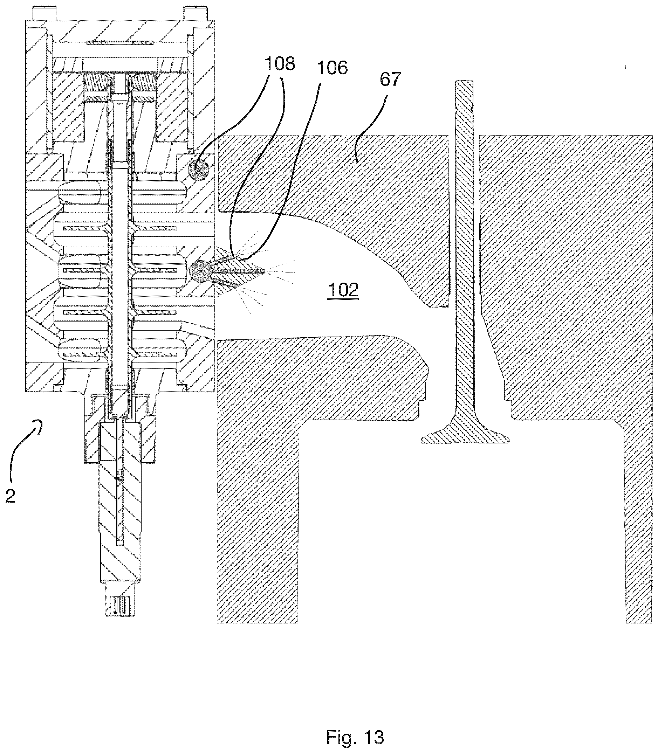

Bezugnehmend auf die Figuren 10 bis 13 werden ein dem in Fig. 6 dargestellten Detailquerschnitt entsprechende Detailquerschnitte weiterer vorteilhafter Hubkolbenbrennkraftmaschinen gemäß einem weiteren Aspekt der vorliegenden Offenbarung beschrieben, die nach dem gleichen Prinzip wie die bezüglich Fig. 6 bis 9 beschriebene Hubkolbenbrennkraftmaschinen arbeiten und ausgebildet sind, d.h. alternativ zu dem Ventil 2 als Ladungssteuerungsventil und/oder AGR-Ventil auch herkömmliche Ventile verwendet werden können. Kennzeichnend für diese Ausführungsformen ist, dass das Ventil 2 oder herkömmliche Ventile derart ausgebildet sind, dass die Strömungskeile 106 zusätzlich die Funktion einer Einspritz- bzw. Einleitdüse erfüllen. Hierfür weist das Ventil 2 einen Kraftstoffkanal 108 auf, der in mehreren im Strömungskeil 106 vorgesehenen Düsenöffnungen mündet. Es kann also Kraftstoff (gasförmig oder flüssig) unmittelbar in den Ansaugkanalabschnitt 102 eingespritzt oder eingeleitet werden, wodurch sich weitere Effizienzsteigerungen erreichen lassen. Die stromaufwärts des Ventils 2 vorgesehene Einspritzanalage 84 kann zusätzlich vorhanden sein oder weggelassen werden.

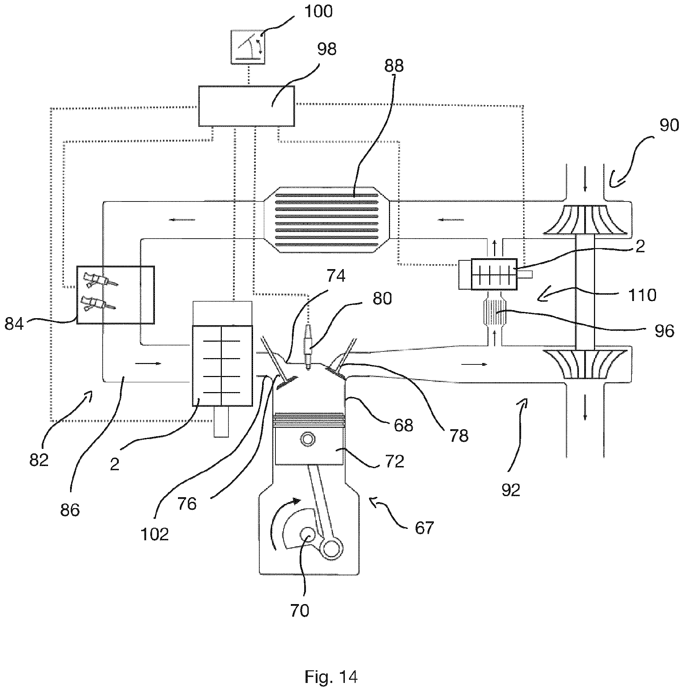

Bezugnehmend auf Fig. 14 wird eine Hubkolbenbrennkraftmaschine gemäß einem weiteren Aspekt der vorliegenden Offenbarung beschrieben. Die Hubkolbenbrennkraftmaschine aus Fig. 14 entspricht derjenigen aus Fig. 4 mit dem Unterschied, dass ein Abgasrückführungskanal 110 den Abgaskanal stromaufwärtig des Turboladers mit dem Ansaugkanal stromabwärtig des Turboladers (bevorzugt stromaufwärtig des Ladeluftkühlers) verbindet. Die bezüglich der Fig. 5 bis 13 beschriebenen Modifikationen können hier ebenfalls zur Anwendung kommen.

Es versteht sich, dass das Ventil 2 nicht unmittelbar am Motorgehäuse angebracht sein muss, sondern auch etwaige Zwischenbauteile bzw. Adapter, die selbst wiederum einen Kanalabschnitt ausbilden, am Motorgehäuse befestigbar sind.

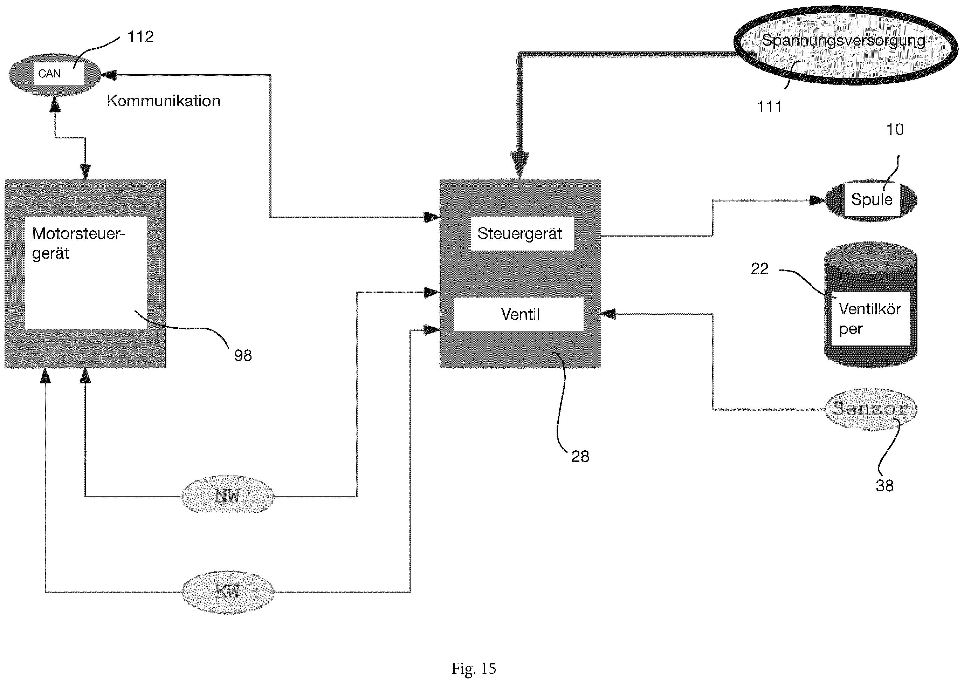

Fig. 15 zeigt beispielhaft die Vernetzung der Steuerung der Hubkolbenbrennkraftmaschine gemäß Fig. 4 oder 14 mit der Steuerung des Ventils 2. Das mit einer Spannungs- bzw. Stromversorgung 111 verbundene Aktuatorsteuergerät 28 für das Ventil 2 erhält über den CAN Bus 112 von dem Motorsteuergerät 98 den Schließwinkel des Einlassventils. Weiterhin ermittelt es mittels eines Nockenwellensensors NW und eines Kurbelwellensensors KW die Motorposition. Die Ansteuerung der Magnetspule 10 erfolgt beispielsweise Pulsweitenmodulationsgesteuert unter Berücksichtigung der erhaltenen und/oder ermittelten Werte und unter Berücksichtigung der vom Positionsbestimmungsmittel 38 erhaltenen Momentanposition des Ventilkörpers 22. Das Motorsteuergerät 98 kann über dieselbe oder eine separate Spannungs- bzw. Stromversorgung versorgt werden.

Es versteht sich von selbst, dass die Steuerung auch durch eine Vielzahl unterschiedlicher Steuergeräte oder durch ein einziges Steuergerät, welches Hubkolbenbrennkraftmaschine und Ventil steuert, realisiert werden kann.

### Bezugszeichenliste

- 2: Ventil
- 4: Aktuator
- 6: Aktuatorgehäuse
- 6a: Seitenwandbauteil
- 6b: Gehäusedeckel
- 6c: Schraubbolzen
- 6d: Sicherungsplatte
- 8: Spulenträger
- 8a: zentrales Durchgangsloch
- 10: Magnetspule
- 12: erster Permanentmagnet
- 16: zweiter Permanentmagnet
- 18: dritter Permanentmagnet
- 20: Verbindungsbauteil
- 20a: Spannbauteil
- 22: Ventilkörper
- 24: Kraftverstärkungsring
- 25: Mantel
- 26: Leitungen
- 28: Aktuatorsteuergerät
- 30: Fluidkanalgehäuse
- 32: Fluidkanal
- 34: Aktuatoröffnung
- 36: Sensoröffnung
- 38: Positionsbestimmungsmittel
- 40: Innenumfangsdichtbereich
- 42: Erweiterungsbereich
- 44: Einlass
- 46: Auslass
- 48: Ventilschaft
- 50: Dichtplatte
- 52: Außenumfangsdichtbereich
- 54: Gleitlager
- 56: Sensorträger
- 58: Gleitlager
- 60: Distanzbauteil
- 62: Sensorspulenträger
- 64: Messanschluss
- 66: Sensorkern
- 67: Motorgehäuse
- 68: Zylinder
- 70: Kurbelwelle
- 72: Kolben
- 74: Einlassöffnung
- 76: Einlassventil
- 78: Auslassventil
- 80: Zündkerzen
- 82: Ansaugkanal
- 84: Einspritzanlage
- 86: Ansaugkanalabschnitt
- 88: Ladeluftkühler
- 90: Abgasturbolader
- 92: Abgaskanal
- 94: Abgasrückführungsvorrichtung
- 96: Abgasrückführungskühler
- 98: Motorsteuergerät
- 100: Gaspedal
- 102: Ansaugkanalabschnitt
- 104: Strömungskeil
- 106: Strömungskeil
- 108: Kraftstoffkanal
- 110: Abgasrückführungskanal
- 111: Spannungs- bzw. Stromversorgung
- 112: CAN Bus

## Patentansprüche

1. Elektromagnetisch betätigtes Ventil, mit
einem elektromagnetischen Ventilaktuator (4) mit
einem Aktuatorgehäuse (6),
einer Magnetspule (10), die an oder in dem Aktuatorgehäuse (6) vorgesehen ist,
einem ersten Permanentmagneten (12), der gehäusefest in dem Aktuatorgehäuse (6) vorgesehen ist,
einem zweiten Permanentmagneten (16), der gehäusefest in dem Aktuatorgehäuse (6) vorgesehen ist, und
einem dritten Permanentmagneten (18), der mit einem Ventilkörper (22) direkt oder über ein Verbindungsbauteil (20) verbunden oder als Teil des Ventilkörpers (22) ausgebildet ist und in dem Aktuatorgehäuse (6) entlang einer Bewegungsachse in einer Axialrichtung bewegbar gelagert ist,
wobei der Ventilaktuator (4) so ausgebildet ist, dass
der dritte Permanentmagnet (18), wenn an der Magnetspule (10) keine Spannung anliegt, durch den ersten und zweiten Permanentmagnet (12, 16) in einer abstoßenden Gleichgewichtslage in der Axialrichtung jeweils mit Abstand zu dem ersten und zweiten Permanentmagneten (12, 16) zwischen diesen in einer ersten Stellung gehalten wird, und
der dritte Permanentmagnet (18) durch Anlegen einer elektrischen Spannung an der Magnetspule (10) in der Axialrichtung relativ zu der ersten Stellung auslenkbar ist, und
einem Fluidkanalgehäuse (30), in dem ein Fluidkanal (32) ausbildet ist,
bei dem
der Ventilkörper (22) in dem Fluidkanalgehäuse (30) und/oder dem Aktuatorgehäuse (6) entlang der Bewegungsachse bewegbar gelagert ist,
**dadurch gekennzeichnet, dass**
der Ventilkörper (22) durch Anlegen unterschiedlicher Spannung oder Anlegen von Spannung und nicht-Anlegen von Spannung an der Magnetspule (10) entlang der Bewegungsachse in eine geschlossene Stellung, in der der Fluidkanal (32) von einem Fluid nicht durchströmbar ist, und eine offene Stellung, in der der Fluidkanal (32) von einem Fluid durchströmbar ist, bringbar ist, ohne dass der Ventilkörper (22) oder mit ihm gekoppelte Teile (4) einen mechanischen Anschlag kontaktieren.

2. Elektromagnetisch betätigtes Ventil nach Anspruch 1, bei dem der elektromagnetische Ventilaktuator weiter aufweist
einen Spulenträger (8), an dem die Magnetspule (10) angebracht ist und der ein zentrales Durchgangsloch (8a) aufweist, das dazu ausgebildet ist, dass sich der Ventilkörper (22) oder das Verbindungsbauteil (20) hindurch erstreckt,
optional einen Kraftverstärkungsring (24), der auf dem zum dem Spulenträger (8) in der Axialrichtung entgegengesetzten ersten Ende der Magnetspule (10) vorgesehen ist und zur Verstärkung des Magnetfelds der Magnetspule (10) ausgebildet ist,
einen Mantel (25), der die Magnetspule (10) radial umgibt, und
einen Gehäusedeckel (6b), der in der Axialrichtung bezüglich des dritten Permanentmagneten (18) auf der zu dem Spulenträger (8) entgegengesetzten Seite angeordnet ist, und den ersten Permanentmagneten (12) trägt,
bei dem
ein dem ersten Permanentmagneten (12) zugewandtes erstes Ende des Spulenträgers (8) innerhalb der Magnetspule (10) endet,
der zweite Permanentmagnet (16) auf dem ersten Ende des Spulenträgers (8) und/oder innerhalb der Magnetspule (10) angeordnet ist,
der Mantel (25), der Gehäusedeckel (6b) und der Spulenträger (8) ferromagnetisch ausgebildet sind, und
der Mantel (25), der Gehäusedeckel (6b) und der Spulenträger (8) mindestens einen Teil eines magnetischen Kreises des von der Magnetspule (10) erzeugten Magnetfelds ausbilden.

3. Elektromagnetisch betätigtes Ventil nach Anspruch 1 oder 2, bei dem
jede Zwischenposition zwischen der geschlossenen Stellung und der offenen Stellung durch Einstellung der Spannung anfahrbar ist.

4. Elektromagnetisch betätigtes Ventil nach einem der Ansprüche 1 bis 3, mit
einem Steuergerät (28), das ausgebildet ist zum Anlegen der unterschiedlichen Spannungen oder Anlegen von Spannung und nicht-Anlegen von Spannung an der Magnetspule (10) derart, dass
der Ventilkörper (22) entlang der Bewegungsachse in die geschlossene Stellung, in der der Fluidkanal (32) von einem Fluid nicht durchströmbar ist, und die offene Stellung, in der der Fluidkanal (32) von einem Fluid durchströmbar ist, bringbar ist, und jede Zwischenposition zwischen der geschlossenen Stellung und der offenen Stellung durch Einstellung der Spannung anfahrbar ist, und/oder
der Ventilkörper im zulässigen Betriebsbereich in zwei Endlagen bringbar und dort dauerhaft haltbar und zwischen ihnen bewegbar ist, ohne dass der Ventilkörper (22) oder mit ihm gekoppelte Teile (4) einen mechanischen Anschlag kontaktieren, und/oder
der Ventilkörper im zulässigen Betriebsbereich in zwei Endlagen bringbar und dort dauerhaft haltbar und zwischen ihnen bewegbar ist und der Ventilkörper (22) durch den Aktuator (4) in beiden Endlagen frei nur durch magnetische Kräfte gehalten wird.

5. Elektromagnetisch betätigtes Ventil nach Ansprüche 4, bei dem
eine der Endlagen der geschlossenen Stellung entspricht und die andere der Endlagen der offenen Stellung entspricht, und
optional der Fluidkanal (32) durch den Ventilkörper (22) in einem Bewegungsbereich in der Axialrichtung in einem Bewegungsbereich vor und/oder nach der offenen Stellung weiterhin geöffnet ist und/oder in einem Bewegungsbereich in der Axialrichtung vor und/oder nach der geschlossenen Stellung geschlossen ist.

6. Elektromagnetisch betätigtes Ventil nach einem der Ansprüche 1 bis 5, bei dem
eine mindestens einen Teil des Fluidkanals (32) ausbildende Innenwand des Fluidkanalgehäuses (30) mindestens einen Innenumfangsdichtbereich (40) aufweist,
der Ventilkörper (22) bevorzugt einen komplementär zu dem Innenumfangsdichtbereich (40) ausgebildeten Außenumfangsdichtbereich (52) aufweist, der zum Verschließen des Fluidkanals (32) nahezu in Anlage an den Innenumfangsdichtbereich (40) bringbar ist, wobei eine Projektion des Innenumfangsdichtbereichs (40) auf eine Projektionsfläche senkrecht zu der Bewegungsachse eine Projektion des Außenumfangsdichtbereichs (52) auf die Projektionsfläche umschreibt oder mit ihr nahezu überein stimmt, so dass sichergestellt wird, dass der Außenumfangsdichtbereich (52) in der Axialrichtung an dem Innenumfangsdichtbereich (40) vorbei bewegbar ist.

7. Elektromagnetisch betätigtes Ventil nach einem der Ansprüche 1 bis 5, bei dem
der Ventilkörper (22) einen Außenumfangsdichtbereich (52) aufweist,
eine den Fluidkanal (32) ausbildende Innenwand des Fluidkanalgehäuses (30) mindestens einen Innenumfangsdichtbereich (40) und mindestens zwei Erweiterungsbereiche (42) aufweist,
bei dem
der Innenumfangsdichtbereich (40) so ausgebildet ist, dass der Außenumfangsdichtbereich (52) in der Axialrichtung an dem Innenumfangsdichtbereich (40) vorbeibewegbar ist und dass der Innenumfangsdichtbereich (40) in der geschlossenen Stellung des Ventilkörpers (22) eine Abdichtung gegenüber dem Außenumfangsdichtbereich (52) in der Richtung senkrecht zu der Axialrichtung erlaubt, so dass der Fluidkanal in dieser Stellung verschlossen ist,
in Bezug auf die Axialrichtung einer der Erweiterungsbereiche (42) auf der einen Seite des Innenumfangsdichtbereichs (40) und der andere der Erweiterungsbereiche (42) auf der anderen Seite des Innenumfangsdichtbereichs (40) ausgebildet ist,
der eine Erweiterungsbereich (42) eine Öffnung zum Einlass (44) des Ventils (2) und der andere Erweiterungsbereich (42) eine Öffnung zum Auslass (46) des Ventils (2) aufweist, so dass in der geschlossenen Stellung des Ventilkörpers der von dem einen Erweiterungsbereich (42) umschlossene Innenraum nur zu dem Einlass (44) geöffnet ist und der von dem anderen Erweiterungsbereich (42) umschlossene Innenraum nur zu dem Auslass geöffnet ist, und
mindestens einer der Erweiterungsbereiche derart ausgebildet ist, dass nach Bewegung des Ventilkörpers in Richtung dieses Erweiterungsbereichs in eine offene Stellung ein offener Fluidkanal von dem Einlass in den Auslass ausgebildet wird.

8. Elektromagnetisch betätigtes Ventil nach Anspruch 7, bei dem
der Ventilkörper (22) n Dichtteller aufweist, deren Außenumfangsfläche Außenumfangsdichtbereiche (52) ausbildet,
in dem Fluidkanalgehäuses in der Axialrichtung hintereinander n + 1 Erweiterungsbereiche (42) und n Innenumfangsdichtbereiche (40) ausgebildet sind,
je ein Innenumfangsdichtbereich (40) in der Axialrichtung zwischen zwei benachbarten Erweiterungsbereichen (42) angeordnet ist,
alle Außenumfangsdichtbereiche (52) in der geschlossenen Stellung, gesehen in einer Richtung senkrecht zu der Bewegungsachse, gleichzeitig in Überlappung mit den Innenumfangsdichtbereichen (40) sind.

9. Elektromagnetisch betätigtes Ventil nach Anspruch 8, bei dem
n geradzahlig ist und das Ventil (2) so ausgebildet ist, dass sich die auf den Ventilkörper (22) in der geschlossen Stellung wirkenden Fluidkräfte gegenseitig aufheben, und
bevorzugt die Bewegungsachse senkrecht zu einer Gesamtströmungsrichtung zwischen Einlass (44) und Auslass (46) des Ventils (2) angeordnet ist.

10. Elektromagnetisch betätigtes Ventil nach einem der Ansprüche 1 bis 9, mit
einem elektronischen Positionsbestimmungsmittel (38) zur Bestimmung der Momentanposition des Ventilkörpers (22), bei dem
das elektronische Positionsbestimmungsmittel (38) mindestens eines aus einem Linearer-Variabler-Differenzial-Transformator-Sensor, einem Hall-Sensor oder einer Software, die eine Positionsbestimmung basierend auf einer Spulenstromverlaufskurve der Magnetspule (10) und/oder auf einer Auswertung eines Magnetfeldänderungsverlaufs der Magnetspule (10) vornimmt, ist und optional mittels des Steuergeräts (28) basierend auf der durch das elektronische Positionsbestimmungsmittel (38) bestimmten Position unterschiedliche Spannungen und/oder keine Spannung an der Magnetspule (10) anlegbar sind, so dass der Ventilkörper (22) im zulässigen Betriebsbereich reproduzierbar in jegliche Position bringbar und dort dauerhaft haltbar ist.

11. Elektromagnetisch betätigtes Ventil nach einem der Ansprüche 1 bis 10, bei dem
die Lagerung des Ventilkörpers (22) und/oder Verbindungsbauteils (20) und/oder dritten Permanentmagneten (18) schmierfrei erfolgt, und/oder
die Lagerung des Ventilkörpers (22) und/oder Verbindungsbauteils (20) und/oder dritten Permanentmagneten (18) über mindestens ein geschlitztes Lager (54) mit negativem Spiel ausgebildet ist, welches bevorzugt auf Basis von ZEDEX530 Material ausgebildet ist und bei dem die Höhe des Lagers in der Axialrichtung bevorzugt 75% bis 85% des inneren Lagerdurchmessers beträgt.

12. Hubkolbenbrennkraftmaschine, mit
einem elektromagnetisch betätigten Ventil (2) nach einem der Ansprüche 1 bis 11,
wenigstens einem Zylinder (68) mit einem Zylinderinnenraum, in dem ein mit einer Kurbelwelle (70) verbundener Kolben (72) arbeitet, welcher Zylinder (68) wenigstens eine Einlassöffnung (74), in der ein entsprechend der Drehung der Kurbelwelle öffnendes und schließendes Einlassventil (76) arbeitet, das den Zylinderinnenraum zeitweilig mit einem in der Einlassöffnung (74) endenden Ansaugkanal (82) verbindet, und
einem Steuergerät (28, 98),
bei der
das elektromagnetisch betätigte Ventil (2) in dem Ansaugkanal (82) angeordnet ist, und
das Steuergerät (28, 98) so ausgebildet ist, dass es das elektromagnetisch betätigte Ventil (2) entweder in mindestens einem vorbestimmten Betriebszustand der Hubkolbenbrennkraftmaschine derart ansteuert, dass der Schließzeitpunkt des elektromagnetisch betätigten Ventils (2) vor dem Schließzeitpunkt des Einlassventils (76) liegt oder in Abhängigkeit wenigstens von einem Leistungsanforderungsglied (100) der Hubkolbenbrennkraftmaschine derart ansteuert, dass der Schließzeitpunkt des elektromagnetisch betätigten Ventils (2) bei abnehmender Leistungsanforderung zunehmend vor dem Schließzeitpunkt des Einlassventils (76) liegt..

13. Hubkolbenbrennkraftmaschine nach Anspruch 12, bei der
das Steuergerät (28, 98) derart ausgebildet ist, dass das elektromagnetisch betätigte Ventil (2) bei noch geschlossenem Einlassventil (76) öffnet, derart, dass eine sich infolge eines zwischen dem elektromagnetisch betätigten Ventil (2) und dem Einlassventil (76) im Ansaugkanal (82) vorhandenen Unterdrucks ausbildende Druckwelle nach Reflexion am offenen Ansaugrohrende das Einlassventil (76) zu einem Zeitpunkt erreicht, zu dem dieses gerade öffnet, so dass die vom Kolben (72) zu leistende Ansaugarbeit vermindert wird.

14. Hubkolbenbrennkraftmaschine nach Anspruch 12 oder 13, bei der
ein wirksame Durchlassöffnung des Ventils größer als die oder gleich der Ansaugkanalquerschnittsfläche, in dem das elektromagnetisch betätigte Ventil angeordnet ist, ist, und/oder
das elektromagnetisch betätigte Ventil so ausgebildet ist, dass
beim Öffnen des elektromagnetischen Ventils ausgehend von der geschlossenen Stellung ein effektiver Strömungsquerschnitt von 10% bis 90% des Öffnungsquerschnitts des elektromagnetischen Ventils in der geöffneten Stellung innerhalb von 1,5 - 4 ms realisiert wird, und/oder
beim Schließen des elektromagnetischen Ventils ausgehend von der geöffneten Stellung ein effektiver Strömungsquerschnitt von 10% bis 90% des Öffnungsquerschnitts des elektromagnetischen Ventils in der geöffneten Stellung innerhalb von 1,5ms - 4ms realisiert wird, und/oder
eine komplette Bewegung von der geöffneten in die geschlossene Stellung oder umgekehrt zwischen 10ms und 12ms benötigt.

15. Hubkolbenbrennkraftmaschine nach einem der Ansprüche 12 bis 14, bei der
das elektromagnetisch betätigte Ventil auf seiner dem Einlassventil zugewandten Seite einen Strömungskeil aufweist, der im eingebauten Zustand des elektromagnetisch betätigten Ventils in den Ansaugkanal in dem Motorgehäuse hineinragt und dadurch ein Volumen des Kanalabschnitts zwischen dem geschlossenen Ansaugkanalventil und dem Einlassventil teilweise ausfüllt, und/oder
das elektromagnetisch betätigte Ventil auf seiner dem Einlassventil zugewandten Seite über ein Zwischenbauteil mit einem Motorgehäuse verbunden ist, wobei das Zwischenbauteil einen Kanalabschnitt ausbildet, der den Auslass des elektromagnetisch betätigten Ventils mit dem Ansaugkanal verbindet, und das Ansaugkanalventil auf seiner dem Einlassventil zugewandten Seite einen Strömungskeil aufweist, der im am Motorgehäuse montierten Zustand des Ansaugkanalventils in den Kanalabschnitt innerhalb des Zwischenbauteils und/oder in den Ansaugkanal in dem Motorgehäuse hineinragt und dadurch ein Volumen des Kanalabschnitts zwischen dem geschlossenen Ansaugkanalventil und dem Einlassventil teilweise ausfüllt.

16. Hubkolbenbrennkraftmaschine mit einer Abgasrückführungsvorrichtung, mit
einem elektromagnetisch betätigten Ventil (2) nach einem der Ansprüche 1 bis 11,
wenigstens einem Zylinder (68), in dessen Zylinderinnenraum ein mit einer Kurbelwelle (70) verbundener Kolben (72) arbeitet, welcher Zylinder (68) wenigstens eine Einlassöffnung, (74) die den Zylinderinnenraum mit einem Ansaugkanal (82) verbindet, und wenigstens eine Auslassöffnung, die den Zylinderinnenraum mit einem Abgaskanal (92) verbindet, aufweist, und
einer Abgasrückführungsvorrichtung (94) zum Zurückführen von Abgas aus dem Abgaskanal (92) in den Ansaugkanal (82) über einen Abgasrückführungskanal, bei der
das elektromagnetisch betätigte Ventil in dem Abgasrückführungskanal zum Öffnen und Schließen desselben vorgesehen ist.

17. Verfahren zum Betreiben des elektromagnetisch betätigten Ventils nach Anspruch 4 oder nach einem der Ansprüche 5 bis 11 soweit auf Anspruch 4 zurückbezogen, mit den folgenden Schritten
Anlegen unterschiedlicher Spannungen oder abwechselnd einer Spannung und keiner Spannung an der Magnetspule (10) mittels des Steuergeräts (28) derart, dass
der Ventilkörper (22) entlang der Bewegungsachse in die geschlossene Stellung, in der der Fluidkanal (32) von einem Fluid nicht durchströmbar ist, oder die offene Stellung, in der der Fluidkanal (32) von einem Fluid durchströmbar ist, gebracht wird und zur Regelung eines Fluidstroms zu beliebigen Zwischenpositionen zwischen der geschlossenen Stellung und der offenen Stellung bewegt wird, und/oder
der Ventilkörper zwischen zwei Endlagen hin- und her bewegt wird, ohne dass der Ventilkörper (22) oder mit ihm gekoppelte Teile (4) einen mechanischen Anschlag kontaktieren, und/oder
der Ventilkörper zwischen zwei Endlagen hin- und her bewegt wird, wobei der Ventilkörper (22) durch den Aktuator (4) in der jeweiligen Endlagen frei nur durch magnetische Kräfte gehalten wird.

## Claims

1. Electromagnetically actuated valve, comprising
an electromagnetic valve actuator (4) with
an actuator housing (6),
a magnetic coil (10) provided on or in the actuator housing (6),
a first permanent magnet (12) fixedly provided in the actuator housing (6),
a second permanent magnet (16) fixedly provided in the actuator housing (6), and
a third permanent magnet (18) which is connected to a valve body (22) directly or via a connecting component (20) or which is formed as part of the valve body (22) and which is movably supported in the actuator housing (6) along a movement axis in an axial direction,
wherein the valve actuator (4) is configured such that
the third permanent magnet (18), when no voltage is applied to the magnetic coil (10), is held in a first position by the first and second permanent magnets (12, 16) in a repulsive equilibrium position in the axial direction between them with respective distance to the first and second permanent magnets (12, 16), and
the third permanent magnet (18) is deflectable in the axial direction relative to the first position by applying an electrical voltage to the magnetic coil (10), and
a fluid duct housing (30) in which a fluid duct (32) is formed,
wherein
the valve body (22) is movably along the movement axis supported within the fluid duct housing (30) and/or the actuator housing (6),
**characterized in that**
the valve body (22) is, by applying different voltages or by applying a voltage and not applying a voltage to the magnetic coil (10), movable along the movement axis into a closed position, in which the fluid duct (32) is not passable by a fluid, and an open position, in which the fluid duct (32) is passable by a fluid, without the valve body (22) or coupled parts (4) contacting a mechanical stop.

2. Electromagnetically actuated valve according to claim 1, wherein the electromagnetic valve actuator further comprises
a coil carrier (8) on which the magnetic coil (10) is mounted and which has a central through-hole (8a) configured for the passage of the valve body (22) or the connecting component (20),
optionally a force amplification ring (24) provided in the axial direction on the first end of the magnetic coil (10) opposite to the coil carrier (8) and configured to enhance the magnetic field of the magnetic coil (10),
a jacket (25) radially surrounding the magnetic coil (10), and
a housing cover (6b) arranged in the axial direction relative to the third permanent magnet (18) on the side opposite to the coil carrier (8) and carrying the first permanent magnet (12),
wherein
a first end of the coil carrier (8) facing the first permanent magnet (12) ends within the magnetic coil (10),
the second permanent magnet (16) is arranged on the first end of the coil carrier (8) and/or within the magnetic coil (10),
the jacket (25), the housing cover (6b), and the coil carrier (8) are formed ferromagnetically, and
the jacket (25), the housing cover (6b), and the coil carrier (8) form at least a part of a magnetic circuit of the magnetic field generated by the magnetic coil (10).

3. Electromagnetically actuated valve according to claim 1 or 2, wherein
any intermediate position between the closed position and the open position is reachable by adjusting the voltage.

4. Electromagnetically actuated valve according to any one of claims 1 to 3, comprising
a control unit (28) configured to apply different voltages or to apply voltage and not apply voltage to the magnetic coil (10) such that
the valve body (22) is movable along the movement axis into the closed position, in which the fluid duct (32) is not passable by a fluid, and the open position, in which the fluid duct (32) is passable by a fluid, and any intermediate position between the closed position and the open position is reachable by adjusting the voltage, and/or
the valve body can be brought into two end positions within the permissible operating range and can be held permanently there, and is movable between them without the valve body (22) or coupled parts (4) contacting a mechanical stop, and/or
the valve body can be brought into two end positions within the permissible operating range and can be held permanently there, and is movable between them, and the valve body (22) in both end positions is freely held only by magnetic forces exerted by the actuator (4).

5. Electromagnetically actuated valve according to claim 4, wherein
one of the end positions corresponds to the closed position and the other of the end positions corresponds to the open position, and
optionally, the fluid duct (32) through the valve body (22) remains open in a range of movement in the axial direction before and/or after the open position, and/or is closed in a range of movement in the axial direction before and/or after the closed position.

6. Electromagnetically actuated valve according to any one of claims 1 to 5, wherein
an inner wall of the fluid duct housing (30) forming at least a part of the fluid duct (32) has at least one inner circumferential sealing area (40),
the valve body (22) preferably has an outer circumferential sealing area (52) formed complementary to the inner circumferential sealing area (40), which can be brought nearly into contact with the inner circumferential sealing area (40) to close the fluid duct (32), wherein a projection of the inner circumferential sealing area (40) onto a projection surface perpendicular to the axis of movement circumscribes or closely matches a projection of the outer circumferential sealing area (52) onto the projection surface, such that it is ensured that the outer circumferential sealing area (52) can move past the inner circumferential sealing area (40) in the axial direction.

7. Electromagnetically actuated valve according to any one of claims 1 to 5, wherein
the valve body (22) has an outer circumferential sealing area (52),
an inner wall of the fluid duct housing (30) forming the fluid duct (32) has at least one inner circumferential sealing area (40) and at least two expansion regions (42),
wherein
the inner circumferential sealing area (40) is formed such that the outer circumferential sealing area (52) can move past the inner circumferential sealing area (40) in the axial direction and such that, in the closed position of the valve body (22), the inner circumferential sealing area (40) seals against the outer circumferential sealing area (52) in a direction perpendicular to the axial direction, thus closing the fluid duct in this position,
in relation to the axial direction, one of the expansion regions (42) is formed on one side of the inner circumferential sealing area (40) and the other of the expansion regions (42) is formed on the other side of the inner circumferential sealing area (40),
the one expansion region (42) has an opening to the inlet (44) of the valve (2) and the other expansion region (42) has an opening to the outlet (46) of the valve (2) such that, in the closed position of the valve body, the interior space enclosed by the one expansion region (42) is open only to the inlet (44) and the interior space enclosed by the other expansion region (42) is open only to the outlet, and
at least one of the expansion regions is formed such that upon movement of the valve body towards this expansion region into the open position, an open fluid duct is formed from the inlet to the outlet.

8. Electromagnetically actuated valve according to claim 7, wherein
the valve body (22) has n sealing plates, the outer circumferential surfaces of which form outer circumferential sealing areas (52),
within the fluid duct housing, n + 1 expansion regions (42) and n inner circumferential sealing areas (40) are formed successively in the axial direction,
one inner circumferential sealing area (40) is arranged in the axial direction between each of two adjacent expansion regions (42),
in the closed position, all outer circumferential sealing areas (52) are simultaneously in overlap with the inner circumferential sealing areas (40), when viewed in a direction perpendicular to the movement axis.

9. Electromagnetically actuated valve according to claim 8, wherein
n is an even number, and the valve (2) is formed such that the fluid forces acting on the valve body (22) in the closed position cancel each other out, and
preferably the movement axis is arranged perpendicular to a total flow direction between the inlet (44) and outlet (46) of the valve (2).

10. Electromagnetically actuated valve according to any one of claims 1 to 9, comprising
an electronic position determining means (38) for determining the current position of the valve body (22), wherein
the electronic position determining means (38) is at least one of a Linear-Variable-Differential-Transformer-sensor, a Hall-sensor, or software that performs position determination based on a coil current curve of the magnetic coil (10) and/or based on an evaluation of a magnetic field change curve of the magnetic coil (10), and optionally, by means of the control unit (28), based on the position determined by the electronic position determining means (38), different voltages and/or no voltage can be applied to the magnetic coil (10) such that the valve body (22) is reproducibly movable within the permissible operating range to any position and can be held permanently there.

11. Electromagnetically actuated valve according to any one of claims 1 to 10, wherein
the supporting of the valve body (22) and/or connecting component (20) and/or third permanent magnet (18) is lubrication-free, and/or
the supporting of the valve body (22) and/or connecting component (20) and/or third permanent magnet (18) is formed by at least one slotted bearing (54) with negative clearance, preferably made of ZEDEX530 material, and wherein the height of the bearing in the axial direction is preferably 75% to 85% of the inner bearing diameter.

12. Reciprocating piston internal combustion engine, comprising
an electromagnetically actuated valve (2) according to any one of claims 1 to 11,
at least one cylinder (68) with a cylinder interior in which a piston (72) connected to a crankshaft (70) operates, wherein the cylinder (68) has at least one inlet opening (74) in which an intake valve (76) operates, which opens and closes according to the rotation of the crankshaft, the intake valve intermittently connecting the cylinder interior with an intake duct (82) ending in the intake opening (74), and
a control unit (28, 98),
wherein
the electromagnetically actuated valve (2) is arranged in the intake duct (82), and
the control unit (28, 98) is configured to control the electromagnetically actuated valve (2) either in at least one predetermined operating condition of the reciprocating piston internal combustion engine such that the closing timing of the electromagnetically actuated valve (2) is before the closing timing of the intake valve (76) or, depending on at least a power demand element (100) of the reciprocating piston internal combustion engine, such that the closing timing of the electromagnetically actuated valve (2) is increasingly located before the closing timing of the intake valve (76) with decreasing power demand.

13. Reciprocating piston internal combustion engine according to claim 12, wherein
the control unit (28, 98) is configured such that the electromagnetically actuated valve (2) opens with the intake valve (76) still closed, such that a pressure wave forming due to a negative pressure present between the electromagnetically actuated valve (2) and the intake valve (76) in the intake duct (82) reaches the intake valve (76) after deflection at the open intake pipe end at a time when the intake valve (76) is just opening thereby reducing the intake work to be performed by the piston (72).

14. Reciprocating piston internal combustion engine according to claim 12 or 13, wherein
an effective flow passage opening of the valve is greater than or equal to the intake duct cross-sectional area in which the electromagnetically actuated valve is arranged, and/or
the electromagnetically actuated valve is formed such that
when opening from the closed position, an effective flow cross-section of 10% to 90% of the opening cross-section of the electromagnetically actuated valve in the open position is achieved within 1.5 - 4 ms, and/or
when closing from the open position, an effective flow cross-section of 10% to 90% of the opening cross-section of the electromagnetically actuated valve in the open position is achieved within 1.5 ms - 4 ms, and/or
a complete movement from the open to the closed position or vice versa takes between 10 ms and 12 ms.

15. Reciprocating piston internal combustion engine according to any one of claims 12 to 14, wherein
the electromagnetically actuated valve has, on its side facing the intake valve, a flow wedge projecting into the intake duct in the engine housing in the installed state of the electromagnetically actuated valve thereby partially filling a volume of the duct section between the closed intake duct valve and the intake valve, and/or
the electromagnetically actuated valve is connected to the engine housing on its side facing the intake valve via an intermediate component, wherein the intermediate component forms a duct section connecting the outlet of the electromagnetically actuated valve to the intake duct, and the intake duct valve has a flow wedge on its side facing the intake valve, which flow wedge, when the intake duct valve is mounted on the engine housing, projects into the duct section within the intermediate component and/or into the intake duct in the engine housing, thereby partially filling a volume of the duct section between the closed intake duct valve and the intake valve.

16. Reciprocating piston internal combustion engine with an exhaust gas recirculation device, comprising
an electromagnetically actuated valve (2) according to any one of claims 1 to 11,
at least one cylinder (68), in the cylinder interior of which a piston (72) connected to a crankshaft (70) operates, wherein the cylinder (68) has at least one intake opening (74) that connects the cylinder interior with an intake duct (82) and at least one exhaust opening that connects the cylinder interior with an exhaust duct (92), and
an exhaust gas recirculation device (94) for recirculating exhaust gas from the exhaust duct (92) into the intake duct (82) via an exhaust gas recirculation duct, wherein
the electromagnetically actuated valve is provided in the exhaust gas recirculation duct to open and close the same.

17. Method for operating the electromagnetically actuated valve according to claim 4 or according to any one of claims 5 to 11, as far as referenced to claim 4, comprising the following steps
applying different voltages or applying alternately a voltage and no voltage to the magnetic coil (10) by means of the control unit (28) such that
the valve body (22) is moved along the movement axis into the closed position, in which the fluid duct (32) is not passable by a fluid, or the open position, in which the fluid duct (32) is passable by a fluid, and moved to any intermediate position between the closed position and the open position to regulate a fluid flow, and/or
the valve body is moved back and forth between two end positions without the valve body (22) or coupled parts (4) contacting a mechanical stop, and/or
the valve body is moved back and forth between two end positions, wherein the valve body (22) is held by the actuator (4) freely only by magnetic forces in the respective end positions.

## Revendications

1. Vanne actionnée électromagnétiquement, avec
un actionneur de vanne électromagnétique (4) avec
un boîtier d'actionneur (6),
une bobine magnétique (10), qui est prévue sur ou dans le boîtier d'actionneur (6),
un premier aimant permanent (12), qui est prévu de manière fixe au boîtier dans le boîtier d'actionneur (6),
un deuxième aimant permanent (16), qui est prévu de manière fixe au boîtier dans le boîtier d'actionneur (6), et
un troisième aimant permanent (18), qui est connecté à un corps de vanne (22) directement ou par l'intermédiaire d'une pièce de liaison (20) ou est formé en tant que partie du corps de vanne (22) et est monté mobile dans le boîtier d'actionneur (6) le long d'un axe de mouvement dans une direction axiale,
l'actionneur de vanne (4) étant conçu de telle sorte que
lorsqu'aucune tension n'est appliquée à la bobine magnétique (10), le troisième aimant permanent (18) est maintenu dans une position d'équilibre répulsive par le premier et le deuxième aimant permanent (12, 16) dans la direction axiale à une distance du premier et du deuxième aimant permanent (12, 16) dans une première position entre ceux-ci, et
le troisième aimant permanent (18) peut être dévié dans la direction axiale par rapport à la première position en appliquant une tension électrique à la bobine magnétique (10), et
un boîtier de canal de fluide (30), dans lequel un canal de fluide (32) est formé,
dans laquelle
le corps de vanne (22) est monté mobile dans le boîtier de canal de fluide (30) et/ou dans le boîtier d'actionneur (6) le long de l'axe de mouvement,
**caractérisée en ce que**
le corps de vanne (22) peut être amené le long de l'axe de mouvement dans une position fermée, dans laquelle le canal de fluide (32) n'est pas traversable par un fluide, et dans une position ouverte, dans laquelle le canal de fluide (32) est traversable par un fluide, en appliquant différentes tensions ou en appliquant une tension et en n'appliquant pas de tension à la bobine magnétique (10), sans que le corps de vanne (22) ou des parties couplées à celui-ci (4) ne contactent un butée mécanique.

2. Vanne actionnée électromagnétiquement selon la revendication 1, dans laquelle l'actionneur de vanne électromagnétique comprend en outre
un porte-bobine (8), sur lequel la bobine magnétique (10) est disposée et qui présente un trou de passage central (8a), qui est conçu pour que le corps de vanne (22) ou la pièce de liaison (20) s'étende à travers celui-ci,
éventuellement une bague d'amplification de force (24), qui est prévue sur la première extrémité de la bobine magnétique (10) opposée au porte-bobine (8) dans la direction axiale, et qui est conçue pour amplifier le champ magnétique de la bobine magnétique (10),
un manteau (25), qui entoure radialement la bobine magnétique (10), et
un couvercle de boîtier (6b), qui est disposé dans la direction axiale par rapport au troisième aimant permanent (18) sur le côté opposé au porte-bobine (8), et qui porte le premier aimant permanent (12),
dans laquelle
une première extrémité du porte-bobine (8) faisant face au premier aimant permanent (12) se termine à l'intérieur de la bobine magnétique (10),
le deuxième aimant permanent (16) est disposé sur la première extrémité du porte-bobine (8) et/ou à l'intérieur de la bobine magnétique (10),
le manteau (25), le couvercle de boîtier (6b) et le porte-bobine (8) sont ferromagnétiques, et
le manteau (25), le couvercle de boîtier (6b) et le porte-bobine (8) forment au moins une partie d'un circuit magnétique du champ magnétique généré par la bobine magnétique (10).

3. Vanne actionnée électromagnétiquement selon la revendication 1 ou 2, dans laquelle
chaque position intermédiaire entre la position fermée et la position ouverte peut être atteinte en réglant la tension.

4. Vanne actionnée électromagnétiquement selon l'une des revendications 1 à 3, avec
un dispositif de commande (28), qui est conçu pour appliquer les différentes tensions ou pour appliquer une tension et ne pas appliquer de tension à la bobine magnétique (10) de telle sorte que
le corps de vanne (22) peut être amené le long de l'axe de mouvement dans la position fermée, dans laquelle le canal de fluide (32) n'est pas traversable par un fluide, et dans la position ouverte, dans laquelle le canal de fluide (32) est traversable par un fluide, et chaque position intermédiaire entre la position fermée et la position ouverte peut être atteinte en réglant la tension, et/ou
le corps de vanne peut être amené entre deux positions finales et y être maintenu de manière permanente et être déplacé entre celles-ci, sans que le corps de vanne (22) ou des parties couplées à celui-ci (4) ne contactent une butée mécanique, et/ou
le corps de vanne peut être amené dans deux positions finales et y être maintenu de manière permanente et être déplacé entre celles-ci, le corps de vanne (22) étant maintenu librement dans les deux positions finales uniquement par des forces magnétiques par l'actionneur (4).

5. Vanne actionnée électromagnétiquement selon la revendication 4, dans laquelle
l'une des positions finales correspond à la position fermée et l'autre des positions finales correspond à la position ouverte, et
éventuellement le canal de fluide (32) à travers le corps de vanne (22) est ouvert dans une plage de mouvement dans la direction axiale dans une plage de mouvement avant et/ou après la position ouverte et/ou est fermé dans une plage de mouvement dans la direction axiale avant et/ou après la position fermée.

6. Vanne actionnée électromagnétiquement selon l'une des revendications 1 à 5, dans laquelle
une paroi intérieure formant au moins une partie du canal de fluide (32) du boîtier de canal de fluide (30) présente au moins une zone de joint d'étanchéité de périmètre intérieur (40),
le corps de vanne (22) présente de préférence une zone de joint d'étanchéité de périmètre extérieur (52) formée de manière complémentaire à la zone de joint d'étanchéité de périmètre intérieur (40), qui peut être amenée presque en contact avec la zone de joint d'étanchéité de périmètre intérieur (40) pour fermer le canal de fluide (32), une projection de la zone de joint d'étanchéité de périmètre intérieur (40) sur une surface de projection perpendiculaire à l'axe de mouvement entourant une projection de la zone de joint d'étanchéité de périmètre extérieur (52) sur la surface de projection ou coïncidant presque avec celle-ci, de sorte qu'il est assuré que la zone de joint d'étanchéité de périmètre extérieur (52) peut être déplacée dans la direction axiale au-delà de la zone de joint d'étanchéité de périmètre intérieur (40).

7. Vanne actionnée électromagnétiquement selon l'une des revendications 1 à 5, dans laquelle
le corps de vanne (22) a une zone de joint d'étanchéité de périmètre extérieur (52),
une paroi intérieure formant au moins une partie du canal de fluide (32) du boîtier de canal de fluide (30) a au moins une zone de joint d'étanchéité de périmètre intérieur (40) et au moins deux zones d'extension (42),
dans laquelle
la zone de joint d'étanchéité de périmètre intérieur (40) est conçue de telle sorte que la zone de joint d'étanchéité de périmètre extérieur (52) peut être déplacée le long de la zone de joint d'étanchéité de périmètre intérieur (40) dans la direction axiale et que la zone de joint d'étanchéité de périmètre intérieur (40) permet une étanchéité par rapport à la zone de joint d'étanchéité de périmètre extérieur (52) dans la direction perpendiculaire à la direction axiale dans la position fermée du corps de vanne (22), de sorte que le canal de fluide est fermé dans cette position,
par rapport à la direction axiale, l'une des zones d'extension (42) est formée d'un côté de la zone de joint d'étanchéité de périmètre intérieur (40) et l'autre des zones d'extension (42) est formée de l'autre côté de la zone de joint d'étanchéité de périmètre intérieur (40),
la zone d'extension (42) a une ouverture vers l'entrée (44) de la vanne (2) et l'autre zone d'extension (42) a une ouverture vers la sortie (46) de la vanne (2), de sorte qu'en position fermée du corps de vanne, l'espace intérieur entouré par la zone d'extension (42) n'est ouvert qu'à l'entrée (44) et l'espace intérieur entouré par l'autre zone d'extension (42) n'est ouvert qu'à la sortie, et
au moins l'une des zones d'extension est conçue de telle sorte qu'après le déplacement du corps de vanne vers cette zone d'extension dans une position ouverte, un canal de fluide ouvert est formé de l'entrée à la sortie.

8. Vanne actionnée électromagnétiquement selon la revendication 7, dans laquelle
le corps de vanne (22) a n plateaux d'étanchéité, dont la surface de périmètre extérieur forme des zones de joint d'étanchéité de périmètre extérieur (52),
dans le boîtier de canal de fluide, n + 1 zones d'extension (42) et n zones de joint d'étanchéité de périmètre intérieur (40) sont formées successivement dans la direction axiale,
une zone de joint d'étanchéité de périmètre intérieur (40) est à chaque fois disposée dans la direction axiale entre deux zones d'extension (42) adjacentes,
toutes les zones de joint d'étanchéité de périmètre extérieur (52) dans la position fermée, vues dans une direction perpendiculaire à l'axe de mouvement, sont simultanément en chevauchement avec les zones de joint d'étanchéité de périmètre intérieur (40).

9. Vanne actionnée électromagnétiquement selon la revendication 8, dans laquelle
n est un nombre pair et la vanne (2) est conçue de telle sorte que les forces de fluide agissant sur le corps de vanne (22) dans la position fermée se neutralisent mutuellement, et
de préférence, l'axe de mouvement est disposé perpendiculairement à une direction globale du flux entre l'entrée (44) et la sortie (46) de la vanne (2).

10. Vanne actionnée électromagnétiquement selon l'une des revendications 1 à 9, avec
un moyen de détermination de position électronique (38) pour déterminer la position instantanée du corps de vanne (22), dans laquelle
le moyen de détermination de position électronique (38) est au moins l'un d'un capteur de transformateur différentiel variable linéaire, d'un capteur Hall ou d'un logiciel qui effectue une détermination de position basée sur une courbe de courant de bobine de la bobine magnétique (10) et/ou sur une évaluation d'un changement de champ magnétique de la bobine magnétique (10), et éventuellement, en fonction de la position déterminée par le moyen de détermination de position électronique (38), différentes tensions et/ou aucune tension peuvent être appliquées à la bobine magnétique (10) par le dispositif de commande (28), de sorte que le corps de vanne (22) peut être amené de manière reproductible dans n'importe quelle position dans la plage de fonctionnement autorisée et peut y être maintenu de manière permanente.

11. Vanne actionnée électromagnétiquement selon l'une des revendications 1 à 10, dans laquelle
le logement du corps de vanne (22) et/ou de la pièce de liaison (20) et/ou du troisième aimant permanent (18) est effectué sans lubrification,
et/ou le logement du corps de vanne (22) et/ou de la pièce de liaison (20) et/ou du troisième aimant permanent (18) est réalisé par au moins un palier fendu (54) avec un jeu négatif, qui est de préférence réalisé sur la base du matériau ZEDEX530 et dans laquelle la hauteur du palier dans la direction axiale est de préférence de 75% à 85% du diamètre intérieur du palier.

12. Moteur à combustion interne alternatif, avec
une vanne actionnée électromagnétiquement (2) selon l'une des revendications 1 à 11,
au moins un cylindre (68) avec un espace intérieur du cylindre, dans lequel fonctionne un piston (72) relié à un vilebrequin (70), ledit cylindre (68) ayant au moins une ouverture d'entrée (74), dans laquelle une vanne d'entrée (76) s'ouvre et se ferme en fonction de la rotation du vilebrequin, qui relie temporairement l'espace intérieur du cylindre à un canal d'admission (82) se terminant dans l'ouverture d'entrée (74), et
un dispositif de commande (28, 98),
dans lequel
la vanne actionnée électromagnétiquement (2) est disposée dans le canal d'admission (82), et
le dispositif de commande (28, 98) est conçu de telle sorte qu'il commande la vanne actionnée électromagnétiquement (2) soit dans au moins un état de fonctionnement prédéterminé du moteur à combustion interne alternatif de telle sorte que le point de fermeture de la vanne actionnée électromagnétiquement (2) se situe avant le point de fermeture de la vanne d'entrée (76), soit en fonction d'au moins un élément de demande de puissance (100) du moteur à combustion interne alternatif de telle sorte que le point de fermeture de la vanne actionnée électromagnétiquement (2) se situe de plus en plus avant le point de fermeture de la vanne d'entrée (76) lorsque la demande de puissance diminue.

13. Moteur à combustion interne alternatif selon la revendication 12, dans lequel
le dispositif de commande (28, 98) est conçu de telle sorte que la vanne actionnée électromagnétiquement (2) s'ouvre lorsque la vanne d'entrée (76) est encore fermée, de telle sorte qu'une onde de pression se formant en raison d'une dépression présente entre la vanne actionnée électromagnétiquement (2) et la vanne d'entrée (76) dans le canal d'admission (82), après avoir été réfléchie, atteint la vanne d'entrée (76) à un moment où celle-ci vient juste de s'ouvrir, de sorte que le travail d'aspiration à effectuer par le piston (72) est réduit.

14. Moteur à combustion interne alternatif selon la revendication 12 ou 13, dans lequel
une ouverture de passage effective de la vanne est supérieure ou égale à la surface de section transversale du canal d'admission dans lequel la vanne électromagnétiquement actionnée est disposée, et/ou
la vanne électromagnétiquement actionnée est conçue de telle sorte que
lors de l'ouverture de la vanne électromagnétique à partir de la position fermée, une section transversale d'écoulement effective de 10% à 90% de la section transversale d'ouverture de la vanne électromagnétique dans la position ouverte est réalisée en 1,5-4 ms, et/ou
lors de la fermeture de la vanne électromagnétique à partir de la position ouverte, une section transversale d'écoulement effective de 10% à 90% de la section transversale d'ouverture de la vanne électromagnétique dans la position ouverte est réalisée en 1,5 ms-4 ms, et/ou
un mouvement complet de la position ouverte à la position fermée ou inversement nécessite entre 10 ms et 12 ms.

15. Moteur à combustion interne alternatif selon l'une des revendications 12 à 14, dans lequel
la vanne électromagnétiquement actionnée présente sur son côté face à la vanne d'admission un coin d'écoulement qui, à l'état monté de la vanne électromagnétiquement actionnée, fait saillie dans le canal d'admission dans le carter du moteur et remplit ainsi partiellement un volume de la section de canal entre la vanne d'admission fermée et la vanne d'admission, et/ou
la vanne électromagnétiquement actionnée est reliée sur son côté faisant face à la vanne d'admission par un élément intermédiaire à un carter de moteur, l'élément intermédiaire formant une section de canal qui relie la sortie de la vanne électromagnétiquement actionnée au canal d'admission, et la vanne d'admission présente sur son côté faisant face à la vanne d'admission un coin d'écoulement qui, à l'état monté de la vanne d'admission sur le carter du moteur, fait saillie dans la section de canal à l'intérieur de l'élément intermédiaire et/ou dans le canal d'admission dans le carter du moteur et remplit ainsi partiellement un volume de la section de canal entre la vanne d'admission fermée et la vanne d'admission.

16. Moteur à combustion interne alternatif avec un dispositif de recirculation des gaz d'échappement, avec
une vanne électromagnétiquement actionnée (2) selon l'une des revendications 1 à 11,
au moins un cylindre (68), dans l'espace intérieur duquel un piston (72) relié à un vilebrequin (70) fonctionne, ledit cylindre (68) ayant au moins une ouverture d'admission (74) qui relie l'espace intérieur du cylindre à un canal d'admission (82), et au moins une ouverture d'échappement, qui relie l'espace intérieur du cylindre à un canal d'échappement (92), et
un dispositif de recirculation des gaz d'échappement (94) pour le retour des gaz d'échappement du canal d'échappement (92) dans le canal d'admission (82) via un canal de recirculation des gaz d'échappement, dans lequel
la vanne électromagnétiquement actionnée est prévue dans le canal de recirculation des gaz d'échappement pour l'ouvrir et le fermer.

17. Procédé pour faire fonctionner la vanne électromagnétiquement actionnée selon la revendication 4 ou selon l'une des revendications 5 à 11 dans la mesure où elle se réfère à la revendication 4, comprenant les étapes suivantes
application de tensions différentes ou alternativement d'une tension et aucune tension à la bobine magnétique (10) au moyen du dispositif de commande (28) de telle sorte que
le corps de vanne (22) est amené le long de l'axe de mouvement dans la position fermée, dans laquelle le canal de fluide (32) n'est pas traversable par un fluide, ou dans la position ouverte, dans laquelle le canal de fluide (32) est traversable par un fluide, et est déplacé pour réguler un flux de fluide vers n'importe quelle position intermédiaire entre la position fermée et la position ouverte, et/ou
le corps de vanne est déplacé d'avant en arrière entre deux positions finales sans que le corps de vanne (22) ou les pièces (4) couplées à lui ne contactent un butoir mécanique, et/ou
le corps de vanne est déplacé d'avant en arrière entre deux positions finales, le corps de vanne (22) étant maintenu librement dans chaque position finale par l'actionneur (4) uniquement par des forces magnétiques.
